# EUROPEAN PATENT APPLICATION

(11) **EP 4 835 783 A1**
(43) Date of publication of application: **04.11.2026**
(21) Application number: 26167739.7
(22) Date of filing: 25.03.2026
(51) Int. Cl.: G06Q 20/32, G06Q 20/20, G06Q 20/34

(54) **PAYMENT METHOD, ELECTRONIC DEVICE, PAYMENT COLLECTION METHOD, AND PAYMENT COLLECTION DEVICE**

(30) Priority: 30.04.2025 CN 202510570523
(71) Applicant: GUANGDONG OPPO MOBILE TELECOMMUNICATIONS CORP., LTD., Dongguan, Guangdong 523860 (CN)
(72) Inventor: CHEN, Huaxing, No.18 Haibin Road Wusha,Chang'an,Dongguan Guangdon, 523860 (CN)
(74) Representative: Penza, Giancarlo

(57) **Abstract**

Provided are a payment method, an electronic device, and a payment collection method, and a payment collection device. In the payment method, when the electronic device is in a screen-off mode, an NFC carrier signal group transmitted by the payment collection device in a carrier transmission mode is received, the NFC carrier signal group including one NFC carrier signal or multiple NFC carrier signals provided at intervals. The electronic device enters a reader mode according to the NFC carrier signal group. The electronic device in the reader mode reads tag information of the payment collection device being in a card emulation mode. The electronic device invokes a payment application to process a payment, according to the tag information. The payment method of the present disclosure can alleviate the trouble caused when the electronic device in the screen-off mode needs to process a payment.

## Description

### TECHNICAL FIELD

The present disclosure relates to the technical field of inductive interaction, and particularly to a payment method, an electronic device, a payment collection method, and a payment collection device.

### BACKGROUND

With the advancement of technology, electronic devices such as mobile phones can support more and more functions with increasing power, and the electronic devices are developing in a diversified and personalized direction. Near Field Communication (NFC) is a short-range high-frequency radio technology evolved from the integration of contactless radio frequency identification (RFID) and interconnection technology, which provides a very safe and fast communication method for electronic devices. With the use and popularization of electronic devices supporting the NFC function, NFC technology has been applied in payment and collection scenarios. However, in the related art, when an electronic device such as a mobile phone reads a tag of a payment collection device (which is a device that collects payment) to process (make) a payment, there is a trouble.

### SUMMARY

The invention is set out in the appended set of claims.

In summary, in the payment method provided by the embodiments of the present disclosure, the electronic device receives, in the screen-off state thereof, the NFC carrier signal group transmitted by the payment collection device being in the carrier transmission mode, and the electronic device enters the reader mode according to the NFC carrier signal group. The electronic device being in the reader mode reads the tag information of the payment collection device being in the card emulation mode, and invokes the payment application to process the payment according to the tag information. As can be seen, the payment method provided by the embodiments of the present disclosure can alleviate the problem in the related art that the user is troubled in processing a payment when the electronic device is in the screen-off mode, and reduce the trouble of processing a payment with the electronic device.

### BRIEF DESCRIPTION OF THE DRAWINGS

To clearly illustrate technical solutions of the embodiments of the present disclosure, drawings required for the embodiments are briefly introduced below. Apparently, the drawings in the following description are some embodiments of the present disclosure, and those skilled in the art can obtain other drawings based on these drawings without creative efforts.
FIG. 1 is a flowchart of a payment method provided by an embodiment of the present disclosure.
FIG. 2 is a diagram schematically illustrating interaction of the payment method shown in FIG. 1.
FIG. 3 is a detailed flowchart of S120 shown in FIG. 1.
FIG. 4 is a flowchart of S11 in the payment method provided by an embodiment of the present disclosure.
FIG. 5 is a schematic diagram of an NFC carrier signal group according to an embodiment of the present disclosure.
FIG. 6 is a schematic diagram of S13 included in the payment method provided by an embodiment of the present disclosure.
FIG. 7 is a schematic block diagram of an electronic device provided by an embodiment of the present disclosure.
FIG. 8 is a schematic block diagram of the electronic device provided by another embodiment of the present disclosure.
FIG. 9 is a schematic block diagram of the electronic device provided by still another embodiment of the present disclosure.
FIG. 10 is a flowchart of a payment collection method provided by an embodiment of the present disclosure.
FIG. 11 is a detailed flowchart of S310 according to an embodiment.
FIG. 12 is a detailed flowchart of S330a included in S330 according to an embodiment.
FIG. 13 is a detailed flowchart of S330b included in S330 according to another embodiment.
FIG. 14 is a detailed flowchart of S330c included in S330 according to still another embodiment.
FIG. 15 is a detailed flowchart of S310 in the payment collection method provided by an embodiment of the present disclosure.
FIG. 16 is a schematic block diagram of a payment collection device provided by an embodiment of the present disclosure.
FIG. 17 is a schematic block diagram of the payment collection device provided by another embodiment of the present disclosure.
FIG. 18 is a schematic block diagram of the payment collection device provided by still another embodiment of the present disclosure.
FIG. 19 is a flowchart illustrating interaction between the payment collection device and the electronic device as provided by an embodiment of the present disclosure.

### DETAILED DESCRIPTION OF PREFERRED EMBODIMENTS

The technical solutions of the present disclosure will be clearly and comprehensively described below with reference to the drawings. Apparently, the described embodiments are only some embodiments of the present disclosure, rather than all embodiments thereof. All other embodiments, obtained by those skilled in the art based on the embodiments of the present disclosure without creative efforts, fall within the scope of protection of the present disclosure.

Reference to "an embodiment" in the present disclosure means that a specific feature, structure, or characteristic described in conjunction with the embodiment may be included in at least one embodiment of the present disclosure. The appearance of the phrase in various places in the specification does not necessarily refer to a same embodiment, nor is it an independent or alternative embodiment mutually exclusive with other embodiments. Those skilled in the art can explicitly and implicitly understand that the embodiment described in the present disclosure can be combined with other embodiments.

Terms "first", "second", etc. in the specification and claims of the present disclosure and the drawings are used to distinguish different objects, not to describe a specific order. In addition, terms "comprise/include" and "have/with" and any variations thereof are intended to cover non-exclusive inclusion. For example, a component or device including one or more components is not limited to the listed one or more components, but optionally further includes one or more components inherent to the illustrated product that are not listed, or one or more components that the product should have based on the descried function.

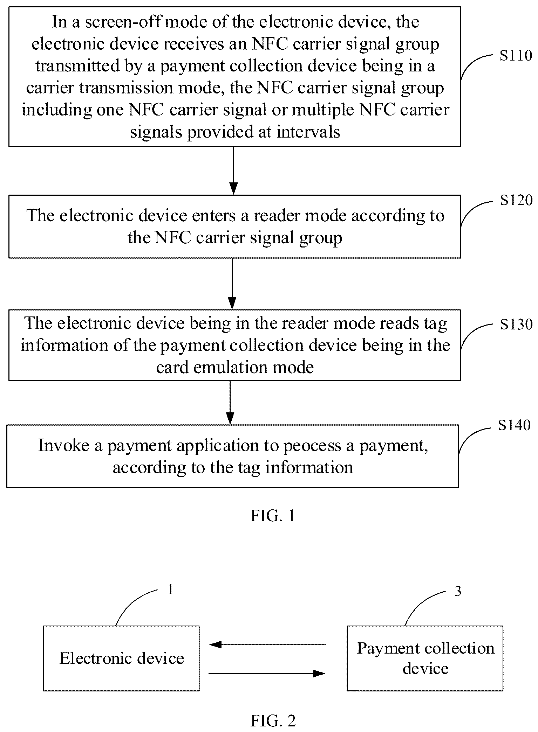

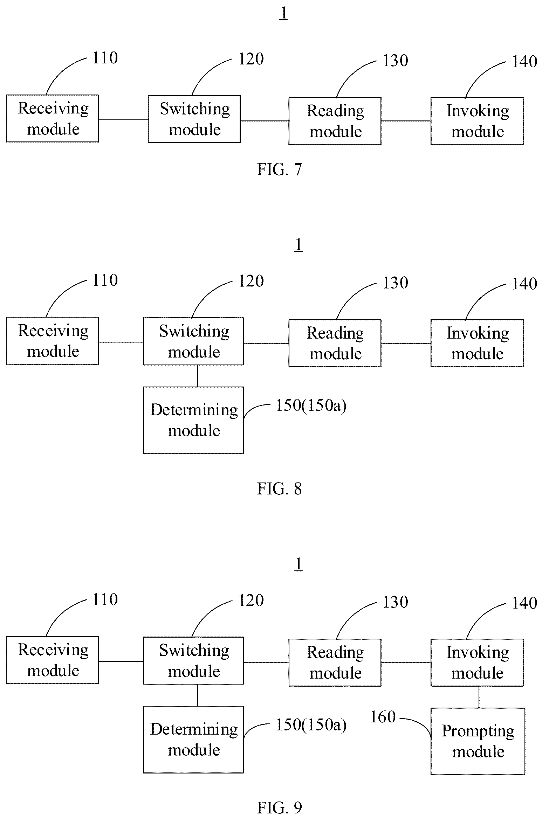

To clearly introduce the payment method and the electronic device 1 (referring to FIG. 2, FIG. 7, etc.) provided by the embodiments of the present disclosure, the electronic device 1 in the related art is first introduced.

In the related art, the electronic device 1 such as a mobile phone or a tablet computer includes an NFC module, and it can communicate with other devices. The electronic device 1 usually has a reader mode (also called a reader/writer mode, which is referred to simply as the reader mode herein) and a card emulation mode. The reader mode is also called an active mode, and the card emulation mode is also called a passive mode. In other words, the electronic device 1 has an active mode and a passive mode. When the electronic device 1 is in the reader mode (i.e., the active mode), the electronic device 1 can read information of other devices being in the card emulation mode. When the electronic device 1 is in the card emulation mode (i.e., the passive mode), other devices being in the reader mode can read information of the electronic device 1. As can be seen, when the electronic device 1 communicates with other devices, in an implementation, the electronic device 1 is in the reader mode and the other devices are in the card emulation mode; and in another implementation, the other devices are in the reader mode and the electronic device 1 is in the card emulation mode.

In addition, the electronic device 1 also has a screen-off mode (also called display-off mode) and a screen-on mode. Usually, when the electronic device 1 in the related art is in the screen-off mode, the electronic device 1 is in the card emulation mode (also called the passive mode); and when the electronic device 1 in the related art is in the screen-on mode, the electronic device 1 is in the reader mode (also called the active mode).

In the related art, when the electronic device 1 is used in scenarios that it is swiped as for example a metro card, a bus card, or an access card, the electronic device 1 is in the screen-off mode and in the card emulation mode (also called the passive mode), and the read head of the metro, bus, or access control terminal is in the reader mode. The read head being in the reader mode sends a standard NFC signal to read information of the electronic device 1 being in the card emulation mode, so that a card swiping operation is performed with the electronic device 1. When the electronic device 1 is used to read a tag of a payment collection device 3, the electronic device 1 needs to be in the screen-on mode and in the reader mode (also called the active mode), so as to process a payment to the payment collection device 3 in the card emulation mode. However, for general users, it is difficult to distinguish the usage scenarios of the electronic device 1. For example, when it needs to use the electronic device 1 to read the tag of the payment collection device 3 to process a payment, the user may often mistakenly believe that the electronic device 1 can also process the payment when being in the screen-off mode. In the related art, if the user tries to use the electronic device 1 in the screen-off mode to read the tag of the payment collection device 3 for processing a payment, the payment (also called paying) cannot be processed. As can be seen, in the related art, the electronic device 1 troubles the user in the scenario where the payment needs to be processed in the screen-off mode of the electronic device, which makes the user mistakenly believe that the electronic device 1 or the payment collection device 3 is faulty or unusable.

Next, the payment method, the electronic device 1, the payment collection method, the payment collection device 3, and the payment collection method provided by the embodiments of the present disclosure are described in detail.

Referring to FIG. 1 and FIG. 2, FIG. 1 is a flowchart of a payment method provided by an embodiment of the present disclosure, and FIG. 2 is a diagram schematically illustrating interaction of the payment method shown in FIG. 1. The payment method is applied to/implemented by the electronic device 1. The electronic device 1 may be, but not limited to, a mobile phone, a tablet computer, or other devices that support NFC communication and are capable of processing payments. The embodiments of the present disclosure are described by taking a case where the electronic device 1 is a mobile phone as an example, which should not be understood as a limitation to the payment method provided by the embodiments of the present disclosure. The payment method includes S110, S120, S130, and S140 which are described in detail below.

In S110, in a screen-off mode of the electronic device 1, the electronic device 1 receives an NFC carrier signal group transmitted by the payment collection device 3 being in a carrier transmission mode, where the NFC carrier signal group includes one NFC carrier signal or multiple NFC carrier signals provided at intervals.

In an implementation, when the electronic device 1 is in the screen-off mode, the electronic device 1 is also in the card emulation mode.

The payment collection device 3 being in the carrier transmission mode means that the payment collection device 3 is in the active mode. The payment collection device 3 transmits the NFC carrier signal group in the carrier transmission mode, that is, the payment collection device 3 transmits the NFC carrier signal group in the active mode. The payment collection device 3 may be, but not limited to, any one of a Point of Sale (POS) machine, a cash register, a payment collection machine, a mobile phone with a payment collection function, a smart watch with a payment collection function, a tablet computer with a payment collection function, etc.

Each NFC carrier signal in the NFC carrier signal group is usually an NFC single carrier signal and it does not carry an NFC command. In other words, the NFC carrier signal in the NFC carrier signal group is a single carrier without an NFC command. For example, the NFC carrier signal in the NFC carrier signal group is a sine wave with a resonant frequency of 13.56 MHz. In some other implementations, the resonant frequency of the NFC carrier signal in the NFC carrier signal group is greater than or equal to 13.56 MHz-7 KHz and less than or equal to 13.56 MHz+7 KHz.

In this embodiment, when the electronic device 1 is in the screen-off state, it receives the NFC carrier signal group transmitted by the payment collection device 3 being in the carrier transmission mode. The NFC carrier signal in the NFC carrier signal group does not carry an NFC command, so the electronic device 1 does not need to send, according to such NFC command, a response signal that is used to control the payment collection device 3 to enter the card emulation mode. Usually, electronic devices 1 may have multiple manufacturers, and some electronic devices 1 produced by some manufacturers may not have a function of sending a response signal in terms of hardware. The payment method provided by the embodiments of the present disclosure has relatively low requirements on the hardware of the electronic device 1, and it can be applied to more electronic devices 1.

The NFC carrier signal in the NFC carrier signal group is different from the standard NFC signal transmitted by the read head being in the reader mode of for example metro, bus, or access control terminals. If the NFC carrier signal in the NFC carrier signal group is the same as the standard NFC signal, it would trigger the electronic device 1 to enter a field strength event (also referred to as FieldOn event). Specifically, if the NFC carrier signal in the NFC carrier signal group is the same as the standard NFC signal, the NFC carrier signal in the NFC carrier signal group would trigger the electronic device 1 to enter the card emulation mode or continue to maintain the card emulation mode. However, the electronic device 1 in the card emulation mode and the payment collection device 3 in the reader mode cannot complete the payment. For example, in the related art, manufacturers of the payment collection device 3 and manufacturers of various electronic devices 1 have not reached an agreement on business models, business processes, etc., so that the electronic device 1 in the card emulation mode and the payment collection device 3 in the reader mode cannot complete the payment. Among them, the business models between the manufacturers of the payment collection device 3 and the manufacturers of various electronic devices 1 include authorization rights, authorization fees, profit sharing, etc. of the Embedded Secure Element (eSE). The business processes include, but are not limited to, the emulation router configuration of the electronic device 1.

The NFC carrier signal group may be generated by an independent NFC chip in the payment collection device 3, or by an integrated chip in the payment collection device 3 that supports both the reader (card reading) function and the tag function, which is not limited in present disclosure.

When the electronic device 1 interacts with the payment collection device 3 and the electronic device 1 processes a payment to the payment collection device 3, the distance between the electronic device 1 and the payment collection device 3 is less than or equal to a preset distance. For example, the preset distance may be, but not limited to, 20 centimeters. In an implementation, when the distance between the electronic device 1 and the payment collection device 3 is less than or equal to the preset distance, the electronic device 1 can receive the NFC carrier signal group transmitted by the payment collection device 3.

In an implementation, the distance between the electronic device 1 and the payment collection device 3 is zero. For example, when the electronic device 1 is close to and touches the payment collection device 3, the distance between the electronic device 1 and the payment collection device 3 is zero. Regarding the electronic device 1 being close to and touching the payment collection device 3, it is also called that a touch operation is performed between the electronic device 1 and the payment collection device 3, or a tap operation (touch to pay operation) is performed therebetween.

In S120, the electronic device 1 enters a reader mode according to the NFC carrier signal group.

In an implementation, the electronic device 1 in the screen-off mode receives the NFC carrier signal group, then the electronic device 1 is switched from being in the screen-off mode to being in the screen-on mode, and enters the reader mode (also called the active mode). In this implementation, before receiving the NFC carrier signal group, the electronic device 1 is in the screen-off mode and in the card emulation mode (also called the passive mode); and after receiving the NFC carrier signal group, the electronic device 1 is switched from being in the screen-off mode to being in the screen-on mode and switched from being in the card emulation mode to being in the reader mode.

The electronic device 1 being switched from being in the screen-off mode to being in the screen-on mode usually means that the display screen of the electronic device 1 is switched from the screen-off mode to the screen-on mode. When the electronic device 1 is switched, according to the NFC carrier signal group, from being in the screen-off mode to being in the screen-on mode and from being in the card emulation mode to being in the reader mode, the switching of the electronic device 1 from being in the screen-off mode to being in the screen-on mode may play a role of reminding the user. Further, if the electronic device 1 has a screen lock password, the switching of the electronic device 1 from being in the screen-off mode to being in the screen-on mode according to the NFC carrier signal group may also facilitate the electronic device 1 to display an unlock interface for collecting user identity information in the screen-on mode.

In another implementation, after the electronic device 1 in the screen-off mode receives the NFC carrier signal group, the electronic device 1 keeps being in the screen-off state, and enters the reader mode. In this implementation, before receiving the NFC carrier signal group, the electronic device 1 is in the screen-off mode and in the card emulation mode; and after receiving the NFC carrier signal group, the electronic device 1 keeps being in the screen-off state and is switched from being in the card emulation mode to being in the reader mode.

In the payment method provided by the embodiments of the present disclosure, according to the NFC carrier signal group, the electronic device 1 enters the reader mode. The electronic device 1 is switched from being in the screen-off mode to being in the screen-on mode and switched from being in the card emulation mode to being in the reader mode, alternatively, the electronic device 1 may keep being in the screen-off state and enter the reader mode, as long as the electronic device 1 can enter the reader mode according to the NFC carrier signal group.

When the electronic device 1 is in the reader mode and the payment collection device 3 is in the card emulation mode, the electronic device 1 and the payment collection device 3 can communicate, and the electronic device 1 may process a payment according to tag information of the payment collection device 3.

In S130, the electronic device 1 being in the reader mode reads tag information of the payment collection device 3 being in the card emulation mode.

The electronic device 1 is in the reader mode, the payment collection device 3 is in the card emulation mode, and the electronic device 1 communicates with the payment collection device 3. In an implementation, the electronic device 1 being in the reader mode sends a reader (card reading) command to read the tag information of the payment collection device 3 being in the card emulation mode.

The electronic device 1 being in the reader mode turns on the NFC signal transmission function (which is also referred to as turning on the NFC field strength) and sends a reader command. In an implementation, the reader command is an NFC standard command. The reader command is used to read the tag information of the payment collection device 3, where the tag information includes a command for invoking the payment application, an amount to be paid, and other information.

In S140, a payment application is invoked to process a payment, according to the tag information.

After the tag information is read, the electronic device 1 invokes a payment application according to the tag information, and processes a payment according to the amount to be paid and other information carried in the tag information.

In summary, in the payment method provided by the embodiments of the present disclosure, the electronic device 1 being in the screen-off state receives the NFC carrier signal group transmitted by the payment collection device 3 being in the carrier transmission mode, and the electronic device 1 enters the reader mode according to the NFC carrier signal group. The electronic device 1 being in the reader mode reads the tag information of the payment collection device 3 being in the card emulation mode, and invokes the payment application to process the payment according to the tag information. As can be seen, the payment method provided by the embodiments of the present disclosure can alleviate the problem in the related art that the user is troubled in processing a payment when the electronic device 1 in the screen-off mode, and reduce the trouble of processing a payment with the electronic device 1.

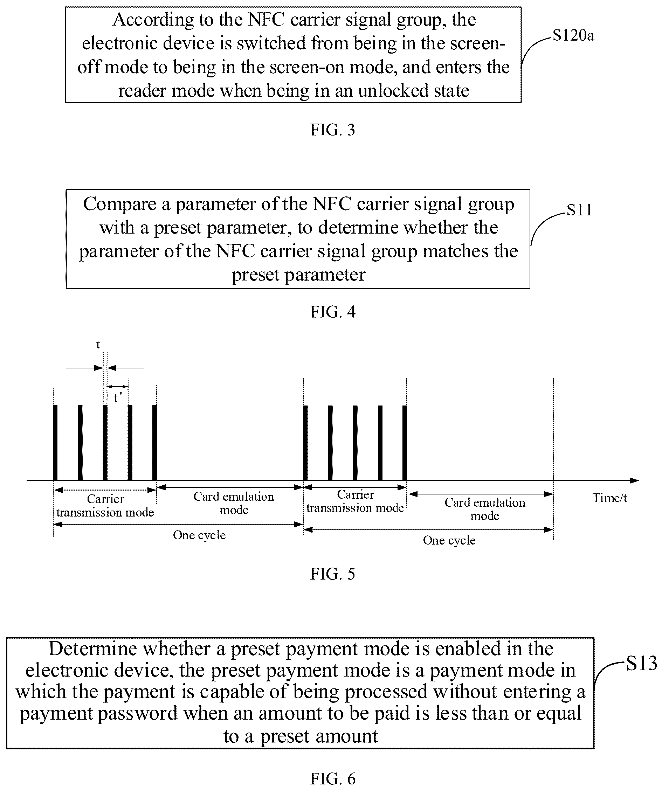

Referring to FIG. 3, a detailed flowchart for S120 shown in FIG. 1 is illustrated. Specifically, S120 includes S120a which is described in detail below.

In S120a, according to the NFC carrier signal group, the electronic device 1 is switched from being in the screen-off mode to being in the screen-on mode, and enters the reader mode when being in an unlocked state.

Usually, when the electronic device 1 is in the screen-off state, the electronic device 1 is also in the screen-locked state. For switching the electronic device 1 from being in the screen-locked state to being in the unlocked state, user identity information needs to be verified. If the user identity information matches preset identity information, the electronic device 1 is switched from being in the screen-locked state to being in the unlocked state.

Specifically, in an implementation, in a case where the electronic device 1 is in the screen-locked state and the electronic device 1 has a screen lock password, the electronic device 1 collects user identity information and compares the collected user identity information with the preset identity information. If the user identity information matches the preset identity information, the electronic device 1 is switched from being in the screen-locked state to being in the unlocked state.

When the electronic device 1 is in the screen-locked state, the electronic device 1 may be in the screen-off state or the screen-on state. Therefore, the electronic device 1 may collect the user identity information in the screen-off state or in the screen-on state. The present disclosure does not limit whether the electronic device 1 collects the user identity information in the screen-on state or in the screen-off state.

In an implementation, the user identity information may be, but not limited to, the user's fingerprint information, palm print information, iris information, facial information, or other biometric information. In another implementation, the user identity information may also be numbers, letters, patterns, or other information input by the user on the input interface of the electronic device 1.

In a case where the user identity information is the user's biometric information, if the matching degree between the user identity information and the preset identity information is greater than or equal to a preset matching degree, it is determined that the user identity information matches the preset identity information. The preset matching degree may be, but not limited to, 90%, 95%, or the like.

In a case where the user identity information includes at least one of numbers and letters, the user identity information needs to be completely the same as the preset identity information, and the arrangement order of the numbers and letters in the user identity information must be completely the same as the arrangement order of the corresponding numbers and letters in the preset identity information.

In this embodiment, only when the electronic device 1 is switched from being in the screen-off mode to being the screen-on mode according to the NFC carrier signal group and the electronic device 1 is in the unlocked state, the electronic device 1 enters the reader mode, which can improve the payment security when the electronic device 1 processes a payment to the payment collection device can be improved.

In some other embodiments, according to the NFC carrier signal group, the electronic device 1 is switched from being in the screen-off mode to being in the screen-on mode, and enters the reader mode regardless of whether the electronic device 1 is in the unlocked state. For example, according to the NFC carrier signal group, the electronic device 1 is switched from being in the screen-off mode to being in the screen-on mode, and enters the reader mode even when being in the locked state, as long as the electronic device 1 is switched from being in the screen-off mode to being in the screen-on mode and enters the reader mode according to the NFC carrier signal group.

In still some other embodiments, in a case where the electronic device 1 does not have a screen lock password, the electronic device 1 may enter the reader mode according to the NFC carrier signal group in a way as follows. Specifically, in the case where the electronic device 1 does not have a screen lock password, the electronic device 1 being in the screen-off mode receives the NFC carrier signal group, the electronic device 1 is then switched from being in the screen-off mode to being in the screen-on mode and enters the reader mode. Specifically, in such embodiments, after the electronic device 1 receives the NFC carrier signal group, it is switched from being in the screen-off mode to being in the screen-on mode and switched from being in the card emulation mode to being in the reader mode.

In some other embodiments, in the case where the electronic device 1 does not have a screen lock password, the electronic device 1 may enter the reader mode according to the NFC carrier signal group in a way as follows. Specifically, in the case where the electronic device 1 does not have a screen lock password, the electronic device 1 being in the screen-off mode receives the NFC carrier signal group, the electronic device 1 then keeps being in the screen-off mode and enters the reader mode. In such embodiments, before receiving the NFC carrier signal group, the electronic device 1 is in the screen-off mode and in the card emulation mode; and after receiving the NFC carrier signal group, the electronic device 1 keeps being in the screen-off state and is switched from being in the card emulation mode to being in the reader mode.

In the payment method provided by the embodiments of the present disclosure, there is no limitation on whether the electronic device 1 has a screen lock password, and there is also no limitation on whether the electronic device 1 is switched from being in the screen-off mode to being in the screen-on mode or keeps being in the screen-off mode according to the NFC carrier signal group after receiving the NFC carrier signal group, as long as the electronic device 1 enters the reader mode according to the NFC carrier signal group.

Further, referring to FIG. 4, a flowchart of S11 in the payment method provided by an embodiment of the present disclosure is illustrated. In this embodiment, between S110 and S120, the payment method further includes S11 which is described in detail below.

In S11, a parameter of the NFC carrier signal group is compared with a preset parameter to determine whether the parameter of the NFC carrier signal group matches the preset parameter.

The NFC carrier signal group includes at least one parameter. In other words, the NFC carrier signal group includes one parameter or multiple parameters. When the NFC carrier signal group includes one parameter, this parameter is compared with the preset parameter to determine whether the parameter of the NFC carrier signal group matches the preset parameter. If this parameter matches the preset parameter, it is determined that the parameter of the NFC carrier signal group matches the preset parameter. Correspondingly, if this parameter does not match the preset parameter, it is determined that the parameter of the NFC carrier signal group does not match the preset parameter.

When the NFC carrier signal group includes multiple parameters, each of the multiple parameters is compared with a respective preset parameter. If each of the multiple parameters matches its respective preset parameter, it is determined that the parameters of the NFC carrier signal group match the preset parameters. Correspondingly, if at least one of the multiple parameters does not match the respective preset parameter, it is determined that the parameters of the NFC carrier signal group do not match the preset parameters.

Correspondingly, S120 includes S120b which is described in detail below.

In S120b, when the parameter of the NFC carrier signal group matches the preset parameter, the electronic device 1 enters the reader mode according to the NFC carrier signal group, where the NFC carrier signal group includes at least one parameter.

As can be seen, if the parameter(s) of the NFC carrier signal group matches the preset parameter(s), the electronic device 1 enters the reader mode according to the NFC carrier signal group. In this way, interference of other NFC signals on the electronic device 1 can be prevented, and the accuracy and security of the electronic device 1 during payment can be improved.

In an implementation, if the parameter(s) of the NFC carrier signal group matches the preset parameter(s), the electronic device 1 is switched from being in the screen-off mode to being in the screen-on mode and enters the reader mode, according to the NFC carrier signal group.

The electronic device 1 being switched from being in the screen-off mode to being in the screen-on mode usually means that the display screen of the electronic device 1 is switched from the screen-off mode to the screen-on mode. If the parameter(s) of the NFC carrier signal group matches the preset parameter(s), the electronic device 1 is switched from being in the screen-off mode to being in the screen-on mode and switched from being in the card emulation mode to being in the reader mode, according to the NFC carrier signal group. The electronic device 1 being switched from being in the screen-off mode to being in the screen-on mode can play a role of reminding the user. Further, if the electronic device 1 has a screen lock password, the electronic device 1 being switched from being in the screen-off mode to being in the screen-on mode according to the NFC carrier signal group can also facilitate the electronic device 1 to display an unlock interface for collecting the user identity information in the screen-on mode.

In another implementation, if the parameter(s) of the NFC carrier signal group matches the preset parameter(s), the electronic device 1 keeps being in the screen-off mode and enters the reader mode, according to the NFC carrier signal group.

In the payment method provided by the present disclosure, if the parameter(s) of the NFC carrier signal group matches the preset parameter(s), the electronic device 1 enters the reader mode according to the NFC carrier signal group. Specifically, the electronic device 1 is switched from being in the screen-off mode to being in the screen-on mode and switched from being in the card emulation mode to being in the reader mode, or the electronic device 1 may keep being in the screen-off state and enter the reader mode, as long as the electronic device 1 enters the reader mode according to the NFC carrier signal group when the parameter(s) of the NFC carrier signal group matches the preset parameter(s).

When the electronic device 1 is in the reader mode and the payment collection device 3 is in the card emulation mode, the electronic device 1 and the payment collection device 3 can communicate, and the electronic device 1 may process a payment according to the tag information of the payment collection device 3.

Correspondingly, in an implementation, if the parameter(s) of the NFC carrier signal group does not match the preset parameter(s), the electronic device 1 is prohibited from entering the reader mode. In another implementation, if the parameter(s) of the NFC carrier signal group does not match the preset parameter(s), the electronic device 1 is prohibited from entering the reader mode, and a prompt message is sent to remind the user.

Referring to FIG. 5, a schematic diagram of the NFC carrier signal group according to an embodiment of the present disclosure is illustrated. In an implementation, the NFC carrier signal group includes one NFC carrier signal or multiple NFC carrier signals provided at intervals. The parameter of the NFC carrier signal group includes the width of the NFC carrier signal, and the preset parameter includes a preset width. When the width of the NFC carrier signal matches the preset width, the parameter of the NFC carrier signal group matches the preset parameter.

In this embodiment, it is illustrated by taking a case where the NFC carrier signal group includes multiple NFC carrier signals as an example, which should not be understood as a limitation to the NFC carrier signal group provided by the embodiments of the present disclosure.

The width of the NFC carrier signal is the duration of the NFC carrier signal. For ease of description, the width of the NFC carrier signal is denoted as t, and the preset width is denoted as t₀. When the width t of the NFC carrier signal satisfies t₀-a ≤ t ≤ t₀+a, it is determined that the width of the NFC carrier signal matches the preset width.

During detection, in order to increase the detection robustness, the width t of the NFC carrier signal is usually compared with a range including the preset width t₀, that is, it is determined whether t satisfies t₀-a ≤ t ≤ t₀+a. If it is satisfied, it is determined that the width of the NFC carrier signal matches the preset width; and if it is not satisfied, it is determined that the width of the NFC carrier signal does not match the preset width.

For example, if the preset width t₀ is 15 µs and a = 5 µs, when the width of the NFC carrier signal satisfies 15 µs-5 µs ≤ t ≤ 15 µs+5 µs, it is considered that the width of the NFC carrier signal matches the preset width.

In an implementation, the payment collection device 3 periodically enters the carrier transmission mode and the card emulation mode, and transmits the NFC carrier signal group in the carrier transmission mode.

In an implementation, in one cycle T0, the duration of the carrier transmission mode is a first duration T1, and the duration of the card emulation mode is a second duration T2. The second duration is greater than the first duration, that is, T2 > T1. In this implementation, the second duration is greater than the first duration, so that the electronic device 1 has a relatively sufficient time to process the payment after being triggered by the NFC carrier signal group to enter the reader mode.

In another implementation, the NFC carrier signal group includes multiple NFC carrier signals provided at uniform intervals. The parameter of the NFC carrier signal group includes the width of the NFC carrier signal and the time interval between two adjacent NFC carrier signals. Correspondingly, the preset parameter includes a preset width and a preset interval. If the width of the NFC carrier signal matches the preset width and the time interval between two adjacent NFC carrier signals matches the preset interval, it is determined that the parameters of the NFC carrier signal group match the preset parameters. And it is determined that the parameters of the NFC carrier signal group do not match the preset parameters, if at least one of the following conditions is met: the width of the NFC carrier signal does not match the preset width, and the time interval between two adjacent NFC carrier signals does not match the preset interval.

Further, in an implementation, the preset width t₀ ranges from 10 µs to 35 µs.

The range of the preset width t₀ is 10 µs to 35 µs. For example, the preset width t₀ may be, but not limited to, 10 µs, 15 µs, 20 µs, 25 µs, 30 µs, or 35 µs.

If the width of the NFC carrier signal is too small, the NFC carrier signal is not easily identified by the electronic device 1. If the width of the NFC carrier signal is too large, it is easy for the NFC carrier signal to trigger the electronic device 1 to enter a field strength event (also referred to as FieldOn event). Specifically, if the width of the NFC carrier signal is too large, the NFC carrier signal group is likely to trigger the electronic device 1 to enter the card emulation mode or continue to maintain the card emulation mode.

In an implementation, the duration of the sub-carrier signal in the standard NFC signal that triggers the electronic device 1 to enter the field strength event (i.e., entering the card emulation mode or continuing to maintain the card emulation mode) is usually greater than or equal to 5 ms. For example, when the electronic device 1 being in the card emulation mode communicates with the read head of the metro, bus, or access control terminal being in the reader mode, the read head sends a standard NFC signal, and the duration of the sub-carrier signal in the standard NFC signal is greater than or equal to 5 ms.

The width of the NFC carrier signal matches the preset width, and the range of the preset width t₀ is 10 µs to 35 µs, which can enable the NFC carrier signal group to trigger the electronic device 1 to enter the reader mode, and reduce the probability of triggering the electronic device 1 to enter the card emulation mode, or reduce the probability of triggering the electronic device 1 to maintain the card emulation mode. As can be seen, in the embodiments, the range of the preset width t₀ is 10 µs to 35 µs, which can improve the accuracy of the electronic device 1 entering the reader mode, thereby alleviating the trouble of the electronic device 1 during payment in the related art.

In an implementation, the time interval t' between two adjacent NFC carrier signals may be, but not limited to, 8 ms to 20 ms. For example, the time interval between two adjacent NFC carrier signals may be, but not limited to, 8 ms, 9 ms, 10 ms, 11 ms, 12 ms, 13 ms, 14 ms, 15 ms, 16 ms, 17 ms, 18 ms, 19 ms, or 20 ms.

In an implementation, the time interval between two adjacent sub-carrier signals in the standard NFC signal that triggers the electronic device 1 to enter the field strength event (i.e., entering the card emulation mode or continuing to maintain the card emulation mode) is usually 100 ms to 200 ms. In the payment method provided by the embodiments of the present disclosure, the time interval between two adjacent NFC carrier signals may be, but not limited to, 8 ms to 20 ms, which is quite different from the time interval between two adjacent sub-carrier signals in the standard NFC signal, thereby significantly reducing the probability of triggering the electronic device 1 to enter the card emulation mode and significantly reducing the probability of triggering the electronic device 1 to maintain the card emulation mode. As can be seen, in the embodiments, the time interval between two adjacent NFC carrier signals may be, but not limited to, 8 ms to 20 ms, which can improve the accuracy of the electronic device 1 entering the reader mode, thereby alleviating the trouble of the electronic device 1 during payment in the related art.

In an implementation, the width of a single NFC carrier signal in the NFC carrier signal group is 35 µs, and the time interval between two adjacent NFC carrier signals is 10 ms.

In an implementation, the duration of each cycle is 1s, and in one cycle, the duration of the carrier transmission mode is 50 ms. Correspondingly, the width of the single NFC carrier signal in the NFC carrier signal group is 35 µs, and the time interval between two adjacent NFC carrier signals is 10 ms.

In an implementation, through the designs of the width of the NFC carrier signal in the NFC carrier signal group (such as 10 µs ≤ t ≤ 35 µs), the interval between adjacent NFC carrier signals (such as 8 ms to 20 ms), and the duration of the carrier transmission mode and the duration of the card emulation mode in one cycle (that is, T2 > T1), in one aspect, the NFC carrier signal group can more accurately trigger the electronic device 1 to enter the screen-on mode and the reader mode; and in another aspect, the electronic device 1 can have a relatively sufficient time to process the payment after being triggered by the NFC carrier signal group to enter the reader mode.

It is understandable that, in the embodiments of the present disclosure, the number of the NFC carrier signals included in the NFC carrier signal group and the time interval between two adjacent NFC carrier signals may be adjusted as needed, and the duration of the cycle may also be adjusted. The examples of the number of the NFC carrier signals included in the NFC carrier signal group and the time interval between two adjacent NFC carrier signals in the embodiments of the present disclosure should not be understood as limitations to the embodiments of the present disclosure.

Referring to FIG. 6, a schematic diagram of S13 included in the payment method provided by an embodiment of the present disclosure is illustrated. Before S140, the payment method further includes S 13 which is described in detail below.

In S13, it is determined whether a preset payment mode is enabled in the electronic device 1, where the preset payment mode is a payment mode in which the payment is capable of being processed without entering a payment password when an amount to be paid is less than or equal to a preset amount.

Correspondingly, S140 includes: when the preset payment mode is enabled in the electronic device 1 and the electronic device 1 is in a locked state, invoking the payment application to process the payment according to the tag information.

The preset amount may be, but not limited to, 100 yuan, 200 yuan, 500 yuan, or the like. When the current amount to be paid is less than or equal to the preset amount, it may be considered that the current amount to be paid is small, and there is no need to enter the payment password. Therefore, the preset payment mode may also be called a small-amount password-free payment mode.

If the preset payment mode is enabled in the electronic device 1 and the electronic device 1 is in a locked state (also referred to as a screen-locked mode, a locked mode, etc.), according to the payment method, the payment application is invoked to process the payment according to the tag information, which can improve the convenience of payment in the preset payment mode.

Further, in this embodiment, in the case where the preset payment mode is enabled in the electronic device 1 and the electronic device 1 is in the locked state, if it is determined, according to the tag information, that the current amount to be paid is less than or equal to the preset amount, there is no need to enter the payment password of the payment application, and the payment application is invoked to process the payment with the current amount to be paid determined according to the tag information. In this way, the convenience of payment can be improved when the current amount to be paid is small.

It is notable that, the operation of invoking the payment application to process the payment according to the tag information when the preset payment mode is enabled in the electronic device 1 and the electronic device 1 is in the locked state, may be applied to a case where the electronic device 1 in the screen-on mode or the electronic device 1 in the screen-off mode. Specifically, in an implementation, if the preset payment mode is enabled in the electronic device 1, and the electronic device 1 is in the screen-on mode and the locked state, the payment application is invoked to process the payment according to the tag information. In another implementation, if the preset payment mode is enabled in the electronic device 1, and the electronic device 1 is in the screen-off mode and the locked mode, the payment application is invoked to process the payment according to the tag information.

Further, in an implementation provided for the payment method, if the current payment amount is less than or equal to the preset amount, after the payment application is invoked to process the payment according to the tag information in the preset payment mode, the payment method further includes that: the electronic device 1 prompts that the payment has been completed. Regarding the prompting of the completion of the payment by the electronic device 1, it may be implemented by sending a system prompt sound or sending, through the payment application, a prompt message, but it is not limited thereto. In this way, the user can be reminded of the payment result, and the user can easily know the payment result.

It is notable that, in some other implementations, regardless of whether the preset payment mode is enabled in the electronic device 1, after the operation of invoking the payment application to process the payment according to the tag information in S140 is performed, the payment method further includes: prompting the completion of the payment. The prompting of the payment result to the user may be implemented by sending a system prompt sound or sending, through the payment application, a prompt message, but it is not limited thereto. In this way, the user can be reminded of the payment result, and the user can easily know the payment result.

Next, the electronic device 1 provided by the embodiments of the present disclosure is introduced. The payment method(s) described above may be implemented by the electronic device 1 provided by the embodiments of the present disclosure; correspondingly, the electronic device 1 may implement the payment method(s) provided by the previous embodiments.

Referring to FIG. 7, a schematic block diagram of the electronic device provided by an embodiment of the present disclosure is illustrated. The electronic device 1 may be, but not limited to, a mobile phone, a tablet computer, or other devices that support NFC communication. The electronic device 1 includes a receiving module 110, a switching module 120, a reading module 130, and an invoking module 140. The receiving module 110 is configured to receive, in a screen-off mode of the electronic device a, an NFC carrier signal group transmitted by the payment collection device 3 being in a carrier transmission mode, where the NFC carrier signal group includes one NFC carrier signal or multiple NFC carrier signals provided at intervals. The switching module 120 is configured to switch the electronic device 1 to enter a reader mode according to the NFC carrier signal group. The reading module 130 is configured to enable the electronic device 1 being in the reader mode to read tag information of the payment collection device 3 being in a card emulation mode. The invoking module 140 is configured to invoke a payment application to process a payment according to the tag information.

In an implementation, when the electronic device 1 is in the screen-off mode, the electronic device 1 is also in the card emulation mode.

The payment collection device 3 being in the carrier transmission mode means that the payment collection device 3 is in the active mode, or the payment collection device 3 is in the reader mode. The payment collection device 3 transmits the NFC carrier signal group in the carrier transmission mode, that is, the payment collection device 3 transmits the NFC carrier signal group in the active mode (also called the reader mode).

Each NFC carrier signal in the NFC carrier signal group is usually an NFC single carrier signal and it does not carry an NFC command. In other words, the NFC carrier signal in the NFC carrier signal group is a single carrier without an NFC command. For example, the NFC carrier signal in the NFC carrier signal group is a sine wave with a resonant frequency of 13.56 MHz. In some other implementations, the resonant frequency of the NFC carrier signal in the NFC carrier signal group is greater than or equal to 13.56 MHz-7 KHz and less than or equal to 13.56 MHz+7 KHz.

In this embodiment, when the electronic device 1 is in the screen-off state, the receiving module 110 receives the NFC carrier signal group transmitted by the payment collection device 3 being in the carrier transmission mode. The NFC carrier signal in the NFC carrier signal group does not carry an NFC command, so the electronic device 1 does not need to send, according to the NFC command, a response signal that is used to control the payment collection device 3 to enter the card emulation mode. Usually, electronic devices 1 may have multiple manufacturers, and some electronic devices 1 produced by some manufacturers may not have a function of sending a response signal in terms of hardware. The electronic device 1 provided by the embodiments of the present disclosure has relatively low requirements on the hardware of the electronic device 1 when the electronic device 1 communicates with the payment collection device 3 to process a payment, and it can be applied to more electronic devices 1.

The NFC carrier signal in the NFC carrier signal group is different from the standard NFC signal transmitted by the read head being in the reader mode of for example metro, bus, or access control terminals. If the NFC carrier signal in the NFC carrier signal group is the same as the standard NFC signal, it would trigger the electronic device 1 to enter a field strength event (also referred to as FieldOn event). Specifically, if the NFC carrier signal in the NFC carrier signal group is the same as the standard NFC signal, the NFC carrier signal in the NFC carrier signal group would trigger the electronic device 1 to enter the card emulation mode or continue to maintain the card emulation mode. However, the electronic device 1 in the card emulation mode and the payment collection device 3 in the reader mode cannot complete the payment. For example, in the related art, manufacturers of the payment collection device 3 and manufacturers of various electronic devices 1 have not reached an agreement on business models, business processes, etc., so that the electronic device 1 in the card emulation mode and the payment collection device 3 in the reader mode cannot complete the payment. Among them, the business models between the manufacturers of the payment collection devices 3 and the manufacturers of various electronic devices 1 include authorization rights, authorization fees, profit sharing, etc. of the Embedded Secure Element (eSE). The business processes include, but are not limited to, the emulation router configuration of the electronic device 1.

The NFC carrier signal group may be generated by an independent NFC chip in the payment collection device 3, or by an integrated chip in the payment collection device 3 that supports both the reader function and the tag function, which is not limited in the present disclosure.

When the electronic device 1 interacts with the payment collection device 3 and the electronic device 1 processes a payment to the payment collection device 3, the distance between the electronic device 1 and the payment collection device 3 is less than or equal to a preset distance. For example, the preset distance may be, but not limited to, 20 centimeters. In an implementation, when the distance between the electronic device 1 and the payment collection device 3 is less than or equal to the preset distance, the electronic device 1 can better receive the NFC carrier signal group transmitted by the payment collection device 3.

In an implementation, the distance between the electronic device 1 and the payment collection device 3 is zero. For example, when the electronic device 1 is close to and touches the payment collection device 3, the distance between the electronic device 1 and the payment collection device 3 is zero. Regarding the electronic device 1 being close and touching the payment collection device 3, it is also called that a touch operation is performed between the electronic device 1 and the payment collection device 3, or a tap operation (touch to pay operation) is performed therebetween.

In an implementation, the receiving module 110 may be, but not limited to, a Near Field Communication (NFC) antenna.

In an implementation, the receiving module 110 of the electronic device 1 being in the screen-off mode receives the NFC carrier signal group, and the switching module 120 is configured to, according to the NFC carrier signal group, switch the electronic device 1 from being in the screen-off mode to being in the screen-on mode, and switch the electronic device 1 to enter the reader mode (also called the active mode). In this embodiment, when the electronic device 1 is in the screen-off mode, the electronic device 1 is in the card emulation mode (also called the passive mode). After the receiving module 110 of the electronic device 1 receives the NFC carrier signal group, the switching module 120 switches the electronic device 1 from being in the screen-off mode to being in the screen-on mode, and switches the electronic device 1 from being in the card emulation mode to being in the reader mode, according to the NFC carrier signal group.

The electronic device 1 being switched from being in the screen-off mode to being in the screen-on mode usually means that the display screen of the electronic device 1 is switched from the screen-off mode to the screen-on mode. When the switching module 120 is configured to switch, according to the NFC carrier signal group, the electronic device 1 from being in the screen-off mode to being in the screen-on mode and from being in the card emulation mode to being in the reader mode, the switching of the electronic device 1 from being in the screen-off mode to being in the screen-on mode can play a role of reminding the user. Further, if the electronic device 1 has a screen lock password, the switching of the electronic device 1, by the switching module 120, from being in the screen-off mode to being in the screen-on mode according to the NFC carrier signal group, may also facilitate the electronic device 1 to display an unlock interface for collecting user identity information in the screen-on mode.

In another implementation, the electronic device 1 in the screen-off mode receives the NFC carrier signal group, and the switching module 120 is configured to keep the electronic device 1 being in the screen-off state and switch the electronic device 1 to enter the reader mode, according to the NFC carrier signal group. In this implementation, before the signal receiving module 110 of the electronic device 1 receives the NFC carrier signal group, the electronic device 1 is in the screen-off mode and in the card emulation mode; and after the signal receiving module 110 of the electronic device 1 receives the NFC carrier signal group, according to the NFC carrier signal group, the switching module 120 keeps the electronic device 1 being in the screen-off state and switches the electronic device 1 from being in the card emulation mode to being in the reader mode.

In the electronic device 1 provided by the embodiments of the present disclosure, the switching module 120 switches the electronic device 1 to enter the reader mode according to the NFC carrier signal group. The electronic device 1 is switched from being in the screen-off mode to being in the screen-on mode and from being in the card emulation mode to being in the reader mode, alternatively, the electronic device 1 may keep being in the screen-off state and enter the reader mode, as long as the electronic device 1 can enter the reader mode according to the NFC carrier signal group.

When the electronic device 1 is in the reader mode and the payment collection device 3 is in the card emulation mode, the electronic device 1 and the payment collection device 3 can communicate, and the electronic device 1 may process a payment according to the tag information of the payment collection device 3.

The electronic device 1 is in the reader mode, the payment collection device 3 is in the card emulation mode, and the electronic device 1 communicates with the payment collection device 3. In an implementation, the reading module 130 of the electronic device 1 being in the reader mode sends a reader command to read the tag information of the payment collection device 3 being in the card emulation mode.

The reading module 130 controls the electronic device 1 being in the reader mode to turn on the NFC signal transmission function (which is also referred to as turning on the NFC field strength) and send a reader command. In an implementation, the reader command is an NFC standard command. The reader command is used to read the tag information of the payment collection device 3, where the tag information includes a command for invoking the payment application, an amount to be paid, and other information.

After the reading module 130 reads the tag information, the invoking module 140 of the electronic device 1 invokes the payment application according to the tag information, to process the payment according to the amount to be paid and other information carried in the tag information.

In summary, in the electronic device 1 provided by the embodiments of the present disclosure, the receiving module 110 receives, when the electronic device 1 is in the screen-off state, the NFC carrier signal group transmitted by the payment collection device 3 being in the carrier transmission mode. According to the NFC carrier signal group, the switching module 120 of the electronic device 1 switches the electronic device 1 from being in the screen-off state to being in the screen-on state and switches the electronic device 1 to enter the reader mode. The reading module 130 is configured to enable the electronic device 1 being in the reader mode to read the tag information of the payment collection device 3 being in the card emulation mode, and the invoking module 140 invokes the payment application to process the payment according to the tag information. As can be seen, the electronic device 1 provided by the embodiments of the present disclosure can alleviate the problem in the related art that the user is troubled in processing a payment when the electronic device 1 is in the screen-off mode, and reduce the trouble of processing a payment with the electronic device 1.

Further, in an implementation, the switching module 120 is specifically configured to, according to the NFC carrier signal group, switch the electronic device 1 from being in the screen-off mode to the screen-on mode, and switch the electronic device 1 to enter the reader mode when the electronic device 1 is in an unlocked state.

Usually, when the electronic device 1 is in the screen-off state, the electronic device 1 is also in the screen-locked state. For switching the electronic device 1 from being in the screen-locked state to being in the unlocked state, user identity information needs to be verified. If the user identity information matches the preset identity information, the switching module 120 controls the electronic device 1 to be switched from being in the screen-locked state to being in the unlocked state.

Specifically, in an implementation, in a case where the electronic device 1 is in the screen-locked state and the electronic device 1 has a screen lock password, the electronic device 1 collects user identity information, compares the collected user identity information with the preset identity information. If the user identity information matches the preset identity information, the switching module 120 controls the electronic device 1 to be switched from being in the screen-locked state to being in the unlocked state.

When the electronic device 1 is in the screen-locked state, the electronic device 1 may be in the screen-off state or the screen-on state. Therefore, the electronic device 1 may collect the user identity information in the screen-off state or in the screen-on state. The present disclosure does not limit whether the electronic device 1 collects the user identity information in the screen-on state or in the screen-off state.

In an implementation, the user identity information may be, but not limited to, the user's fingerprint information, palm print information, iris information, or other biometric information. In another implementation, the user identity information may also be numbers, letters, patterns, or other information input by the user on the input interface of the electronic device 1.

In a case where the user identity information is the user's biometric information, if the matching degree between the user identity information and the preset identity information is greater than or equal to a preset matching degree, it is determined that the user identity information matches the preset identity information. The preset matching degree may be, but not limited to, 90%, 95%, or the like.

In a case where the user identity information includes at least one of numbers and letters, the user identity information needs to be completely the same as the preset identity information, and the arrangement order of the numbers and letters in the user identity information must be completely the same as the arrangement order of the corresponding numbers and letters in the preset identity information.

In this embodiment, only when the switching module 120 of the electronic device 1 switches the electronic device 1 from being in the screen-off mode to being in the screen-on mode according to the NFC carrier signal group and the electronic device 1 is in the unlocked state, the electronic device 1 enters the reader mode, which can improve the payment security when the electronic device 1 processes a payment to the payment collection device

In some other embodiments, according to the NFC carrier signal group, the switching module 120 controls the electronic device 1 to be switched from being in the screen-off mode to being the screen-on mode, and controls the electronic device 1 to enter the reader mode regardless of whether the electronic device 1 is in the unlocked state. For example, according to the NFC carrier signal group, the electronic device 1 is switched from being in the screen-off mode to being in the screen-on mode, and enters the reader mode even when being in the locked state, as long as the electronic device 1 is switched from being in the screen-off mode to being in the screen-on mode and enters the reader mode according to the NFC carrier signal group.

In still some other embodiments, in a case where the electronic device 1 does not have a screen lock password, regarding the operation that the switching module 120 switches the electronic device 1 to enter the reader mode according to the NFC carrier signal group, it may be implemented as follows. Specifically, in the case where the electronic device 1 does not have a screen lock password, the receiving module 110 of the electronic device 1 being in the screen-off mode receives the NFC carrier signal group, and according to the NFC carrier signal group, the switching module 120 switches the electronic device 1 from being in the screen-off mode to being the screen-on mode, and switches the electronic device 1 to enter the reader mode. Specifically, in such embodiments, after the receiving module 110 of the electronic device 1 receives the NFC carrier signal group, according to the NFC carrier signal group, the switching module 120 switches the electronic device 1 from being in the screen-off mode to being in the screen-on mode and switches the electronic device 1 from being in the card emulation mode to being in the reader mode.

In some other embodiments, in the case where the electronic device 1 does not have a screen lock password, regarding the operation that the switching module 120 switches the electronic device 1 to enter the reader mode according to the NFC carrier signal group, it may be implemented as follows. Specifically, in the case where the electronic device 1 does not have a screen lock password, the receiving module 110 of the electronic device 1 being in in the screen-off mode receives the NFC carrier signal group, and according to the NFC carrier signal group, the switching module 120 controls the electronic device 1 to keep being in the screen-off mode, and switches the electronic device 1 to enter the reader mode. In such embodiments, before the receiving module 110 of the electronic device 1 receives the NFC carrier signal group, the electronic device 1 is in the screen-off mode and in the card emulation mode; and after the receiving module 110 of the electronic device 1 receives the NFC carrier signal group, according to the NFC carrier signal group, the switching module 120 controls the electronic device 1 to keep being in the screen-off state, and switches the electronic device 1 from being in the card emulation mode to being in the reader mode.

In the electronic device 1 provided by the embodiments of the present disclosure, there is no limitation on whether the electronic device 1 has a screen lock password, and there is also no limitation on whether the switching module 120 switches the electronic device 1 from being in the screen-off mode to being in the screen-on mode or keeps the electronic device 1 being in the screen-off mode according to the NFC carrier signal group after the receiving module 110 of the electronic device 1 receives the NFC carrier signal group, as long as the switching module 120 switches the electronic device 1 to enter the reader mode according to the NFC carrier signal group.

Further, referring to FIG. 8, a schematic block diagram of the electronic device provided by another embodiment of the present disclosure is illustrated. The electronic device 1 includes a receiving module 110, a switching module 120, a reading module 130, and an invoking module 140. For the receiving module 110, the switching module 120, the reading module 130, and the invoking module 140, reference may be made to those described above, and they will not be repeated here.

Further, in this embodiment, the electronic device 1 further includes a determining module 150 configured to compare a parameter of the NFC carrier signal group with a preset parameter to determine whether the parameter of the NFC carrier signal group matches the preset parameter.

If the parameter of the NFC carrier signal group matches the preset parameter, the switching module 120 is configured to switch the electronic device 1 to enter the reader mode according to the NFC carrier signal group, where the NFC carrier signal group includes at least one parameter.

The NFC carrier signal group includes at least one parameter. In other words, the NFC carrier signal group includes one parameter or multiple parameters. When the NFC carrier signal group includes one parameter, this parameter is compared with the preset parameter to determine whether this parameter of the NFC carrier signal group matches the preset parameter. If this parameter matches the preset parameter, it is determined that the parameter of the NFC carrier signal group matches the preset parameter. Correspondingly, if this parameter does not match the preset parameter, it is determined that the parameter of the NFC carrier signal group does not match the preset parameter.

When the NFC carrier signal group includes multiple parameters, the determining module 150 compares each of the multiple parameters with a respective preset parameter. If each of the multiple parameters matches its respective preset parameter, the determining module 150 determines that the parameters of the NFC carrier signal group match the preset parameters. Correspondingly, if at least one of the multiple parameters does not match the respective preset parameter, the determining module 150 determines that the parameters of the NFC carrier signal group do not match the preset parameters.

As can be seen that, if the parameter(s) of the NFC carrier signal group matches the preset parameter(s), the electronic device 1 enters the reader mode according to the NFC carrier signal group. In this way, interference of other NFC signals on the electronic device 1 can be prevented, and the accuracy and security of the electronic device 1 during payment can be improved.

In an implementation, the switching module 120 is configured to, if the parameter(s) of the NFC carrier signal group matches the preset parameter(s), switch the electronic device 1 from being in the screen-off mode to being in the screen-on mode and switch the electronic device 1 to enter the reader mode, according to the NFC carrier signal group.

The electronic device 1 being switched from being in the screen-off mode to being in the screen-on mode usually means that the display screen of the electronic device 1 is switched from the screen-off mode to the screen-on mode. The switching module 120 is configured to, if the parameter(s) of the NFC carrier signal group matches the preset parameter(s), switch the electronic device 1 from being in the screen-off mode to being in the screen-on mode and switch the electronic device 1 from being in the card emulation mode to being in the reader mode, according to the NFC carrier signal group. The switching of the electronic device 1 from being in the screen-off mode to being in the screen-on mode by the switching module 120 according to the NFC carrier signal group can play a role of reminding the user. Further, if the electronic device 1 has a screen lock password, the switching of the electronic device 1 from being in the screen-off mode to being in the screen-on mode by the switching module 120 according to the NFC carrier signal group can also facilitate the electronic device 1 to display an unlock interface for collecting the user identity information in the screen-on mode.

In another implementation, the switching module 120 is configured to, if the parameter(s) of the NFC carrier signal group matches the preset parameter(s), keep the electronic device 1 being in the screen-off mode and switch the electronic device 1 to enter the reader mode, according to the NFC carrier signal group.

In the electronic device 1 provided by the present disclosure, if the parameter(s) of the NFC carrier signal group matches the preset parameter(s), the switching module 120 switches the electronic device 1 to enter the reader mode according to the NFC carrier signal group. Specifically, the electronic device 1 is switched from being in the screen-off mode to being in the screen-on mode and from being the card emulation mode to being the reader mode, or the electronic device 1 may keep being in the screen-off state and enter the reader mode, as long as the electronic device 1 enters the reader mode according to the NFC carrier signal group when the parameter(s) of the NFC carrier signal group matches the preset parameter(s).

When the electronic device 1 is in the reader mode and the payment collection device 3 is in the card emulation mode, the electronic device 1 and the payment collection device 3 can communicate, and the electronic device 1 may process a payment according to the tag information of the payment collection device 3.

Correspondingly, in an implementation, the switching module 120 is configured to, if the parameter(s) of the NFC carrier signal group does not match the preset parameter(s), prohibit the electronic device 1 from entering the reader mode. In another implementation, the switching module 120 is configured to, if the parameter(s) of the NFC carrier signal group does not match the preset parameter(s), prohibit the electronic device 1 from entering the reader mode and send a prompt message for reminding.

Referring to FIG. 5, the NFC carrier signal group includes one NFC carrier signal or multiple NFC carrier signals provided at intervals. The parameter of the NFC carrier signal group includes the width of the NFC carrier signal, and the preset parameter includes a preset width. When the width of the NFC carrier signal matches the preset width, the determining module 150 determines that the parameter of the NFC carrier signal group matches the preset parameter.

In this embodiment, it is illustrated by taking a case where the NFC carrier signal group includes multiple NFC carrier signals as an example, which should not be understood as a limitation to the NFC carrier signal group provided by the embodiments of the present disclosure.

The width of the NFC carrier signal is the duration of the NFC carrier signal. For ease of description, the width of the NFC carrier signal is denoted as t, and the preset width is denoted as t₀. When the width t of the NFC carrier signal satisfies t₀-a ≤ t ≤ t₀+a, it is determined that the width of the NFC carrier signal matches the preset width.

During detection, in order to increase the detection robustness, the width t of the NFC carrier signal is usually compared with a range including the preset width t₀, that is, it is determined whether t satisfies t₀-a ≤ t ≤ t₀+a. If it is satisfied, it is determined that the width of the NFC carrier signal matches the preset width; and if it is not satisfied, it is determined that the width of the NFC carrier signal does not match the preset width.

For example, if the preset width t₀ is 15 µs and a = 5 µs, when the width of the NFC carrier signal satisfies 15 µs-5 µs ≤ t ≤ 15 µs+5 µs, it is considered that the width of the NFC carrier signal matches the preset width.

In an implementation, the payment collection device 3 periodically enters the carrier transmission mode and the card emulation mode, and transmits the NFC carrier signal group in the carrier transmission mode.

In an implementation, in one cycle T0, the duration of the carrier transmission mode is a first duration T1, and the duration of the card emulation mode is a second duration T2. The second duration is greater than the first duration, that is, T2 > T1. In this implementation, the second duration is greater than the first duration, so that the electronic device 1 has a relatively sufficient time to process a payment after being triggered by the NFC carrier signal group to enter the reader mode.

In another implementation, the NFC carrier signal group includes multiple NFC carrier signals provided at uniform intervals. The parameter of the NFC carrier signal group includes the width of the NFC carrier signal and the time interval between two adjacent NFC carrier signals. Correspondingly, the preset parameter includes a preset width and a preset interval. If the width of the NFC carrier signal matches the preset width and the time interval between two adjacent NFC carrier signals matches the preset interval, the determining module 150 determines that the parameters of the NFC carrier signal group match the preset parameters. The determining module 150 determines that the parameters of the NFC carrier signal group do not match the preset parameters, if at least one of the following conditions is met: the width of the NFC carrier signal does not match the preset width, and the time interval between two adjacent NFC carrier signals does not match the preset interval.

In an implementation, the preset width t₀ ranges from 10 µs to 35 µs.

The range of the preset width t₀ is 10 µs to 35 µs. For example, the preset width may be, but not limited to, 10 µs, 15 µs, 20 µs, 25 µs, 30 µs, or 35 µs.

If the width of the NFC carrier signal is too small, the NFC carrier signal is not easily identified by the electronic device 1. If the width of the NFC carrier signal is too large, it is easy for the NFC carrier signal to trigger the electronic device 1 to enter a field strength event (also referred to as FieldOn event). Specifically, if the width of the NFC carrier signal is too large, the NFC carrier signal group is likely to trigger the electronic device 1 to enter the card emulation mode or continue to maintain the card emulation mode.

In an implementation, the duration of the sub-carrier signal in the standard NFC signal that triggers the electronic device 1 to enter the field strength event (i.e., entering the card emulation mode or continuing to maintain the card emulation mode) is usually greater than or equal to 5 ms. For example, when the electronic device 1 being in the card emulation mode communicates with the read head of the metro, bus, or access control terminal being in the reader mode, the read head sends a standard NFC signal, and the duration of the sub-carrier signal in the standard NFC signal is greater than or equal to 5 ms.

The range of the preset width t₀ is 10 µs to 35 µs, which can enable the NFC carrier signal group to trigger the electronic device 1 to enter the reader mode, reduce the probability of triggering the electronic device 1 to enter the card emulation mode, and reduce the probability of triggering the electronic device 1 to maintain the card emulation mode. As can be seen, in the embodiments, the range of the preset width t₀ is 10 µs to 35 µs, which can improve the accuracy of the electronic device 1 entering the reader mode, thereby alleviating the trouble of the electronic device 1 during payment in the related art.

In an implementation, the time interval between two adjacent NFC carrier signals may be, but not limited to, 8 ms to 20 ms. For example, the time interval between two adjacent NFC carrier signals may be, but not limited to, 8 ms, 9 ms, 10 ms, 11 ms, 12 ms, 13 ms, 14 ms, 15 ms, 16 ms, 17 ms, 18 ms, 19 ms, or 20 ms.

In an implementation, the time interval between two adjacent sub-carrier signals in the standard NFC signal that triggers the electronic device 1 to enter the field strength event (i.e., entering the card emulation mode or continuing to maintain the card emulation mode) is usually 100 ms to 200 ms. In the electronic device 1 provided by the embodiments of the present disclosure, the time interval between two adjacent NFC carrier signals may be, but not limited to, 8 ms to 20 ms, which is quite different from the time interval between two adjacent sub-carrier signals in the standard NFC signal, thereby significantly reducing the probability of triggering the electronic device 1 to enter the card emulation mode and significantly reducing the probability of triggering the electronic device 1 to maintain the card emulation mode. As can be seen, in the embodiments, the time interval between two adjacent NFC carrier signals may be, but not limited to, 8 ms to 20 ms, which can improve the accuracy of the electronic device 1 entering the reader mode, thereby alleviating the trouble of the electronic device 1 during payment in the related art.

In an implementation, the width of the single NFC carrier signal in the NFC carrier signal group is 35 µs, and the time interval between two adjacent NFC carrier signals is 10 ms.

In an implementation, the duration of each cycle is 1s, and in one cycle, the duration of the carrier transmission mode is 50 ms. Correspondingly, the width of the single NFC carrier signal in the NFC carrier signal group is 35 µs, and the time interval between two adjacent NFC carrier signals is 10 ms.

In an implementation, through the designs of the width of the NFC carrier signal in the NFC carrier signal group (such as 10 µs ≤ t ≤ 35 µs), the interval between adjacent NFC carrier signals (such as 8 ms to 20 ms), and the duration of the carrier transmission mode and the duration of the card emulation mode in one cycle (that is, T2 > T1), in one aspect, the NFC carrier signal group can more accurately trigger the electronic device 1 to enter the screen-on mode and the reader mode; and in another aspect, the electronic device 1 can have a relatively sufficient time to process the payment after being triggered by the NFC carrier signal group to enter the reader mode.

Further, referring to FIG. 9, a schematic block diagram of the electronic device provided by still another embodiment of the present disclosure is illustrated. The electronic device 1 includes a receiving module 110, a switching module 120, a reading module 130, and an invoking module 140. For the receiving module 110, the switching module 120, the reading module 130, and the invoking module 140, reference may be made to those described above, and they will not be repeated here. In this embodiment, the electronic device 1 further includes a determining module 150 and a prompting module 160. The determining module 150 determines whether a preset payment mode is enabled in the electronic device 1, where the preset payment mode is a payment mode in which the payment is capable of being processed without entering a payment password when an amount to be paid is less than or equal to a preset amount. If the preset payment mode is enabled in the electronic device 1 and the electronic device 1 is in a locked state, the invoking module 140 invokes the payment application to process the payment according to the tag information.

Since the content executed by the determining module 150 in this embodiment is different from that of the determining module 150 in the embodiment of FIG. 8, for the convenience of distinction, the determining module 150 in FIG. 8 may be denoted as a determining module 150a, and the determining module 150 in FIG. 9 may be denoted as a determining module 150b.

The preset amount may be, but not limited to, 100 yuan, 200 yuan, 500 yuan, or the like. When the current amount to be paid is less than or equal to the preset amount, it may be considered that the current amount to be paid is small, and there is no need to enter the payment password. Therefore, the preset payment mode may also be called a small-amount password-free payment mode.

If the preset payment mode is enabled in the electronic device 1 and the electronic device 1 is in the locked state (also referred to as a screen-locked mode, a locked mode, etc.), the invoking module invokes the payment application to process the payment according to the tag information, which can improve the convenience of payment in the preset payment mode.

Further, in this embodiment, in the case where the preset payment mode is enabled in the electronic device 1 and the electronic device 1 is in the locked state, if it is determined, according to the tag information, that the current amount to be paid is less than or equal to the preset amount, there is no need to enter the payment password of the payment application, and the payment application is invoked to process the payment with the current amount to be paid determined according to the tag information. In this way, the convenience of payment can be improved when the current amount to be paid is small.

It is notable that, in the case where the preset payment mode is enabled in the electronic device 1 and the electronic device 1 is in the locked state, the invoking module 140 invokes the payment application to process the payment according to the tag information, which can be applied to the electronic device 1 being in the screen-on mode or the electronic device 1 being in the screen-off mode. Specifically, in an implementation, if the preset payment mode is enabled in the electronic device 1 and the electronic device 1 is in the screen-on mode and the locked state, the invoking module 140 invokes the payment application to process the payment according to the tag information. In another implementation, if the preset payment mode is enabled in the electronic device 1 and the electronic device 1 is in the screen-off mode and the locked mode, the invoking module 140 invokes the payment application to process the payment according to the tag information.

Further, in an implementation provided for the electronic device 1, if the current payment amount is less than or equal to the preset amount, after the payment application is invoked to process the payment according to the tag information in the preset payment mode, the prompting module 160 is configured to prompt that the electronic device 1 has completed the payment. Regarding the prompting of the completion of the payment by the prompting module 160, it may be implemented by sending a system prompt sound or sending, through the payment application, a prompt message, but it is not limited thereto. In this way, the user can be reminded of the payment result, and the user can easily know the payment result.

It is notable that, in some other implementations, regardless of whether the preset payment mode is enabled in the electronic device 1, after the invoking module 140 invokes the payment application to process the payment according to the tag information, the prompting module 160 is configured to prompt the completion of the payment. The prompting of the payment result to the user may be implemented via the prompting module 160 by sending a system prompt sound or sending, through the payment application, a prompt message, but it is not limited thereto. In this way, the user can be reminded of the payment result, and the user can easily know the payment result.

Further, the embodiments of the present disclosure further provides a computer-readable medium. The computer-readable medium is configured to store a computer program which, when being executed, causes the payment method according to any one of the previous embodiments to be implemented.

The computer-readable medium may be, but not limited to, a U disk, a Read-Only Memory (ROM), a Random Access Memory (RAM), a mobile hard disk, a magnetic disk, an optical disk, or other various media that can store program codes.

The embodiments of the present disclosure further provides a payment collection method. The payment collection method is applied to a payment collection device 3. The payment collection device 3 may be, but not limited to, an NFC payment collection device 3. The payment collection method provided by the embodiments of the present disclosure will be described in detail below.

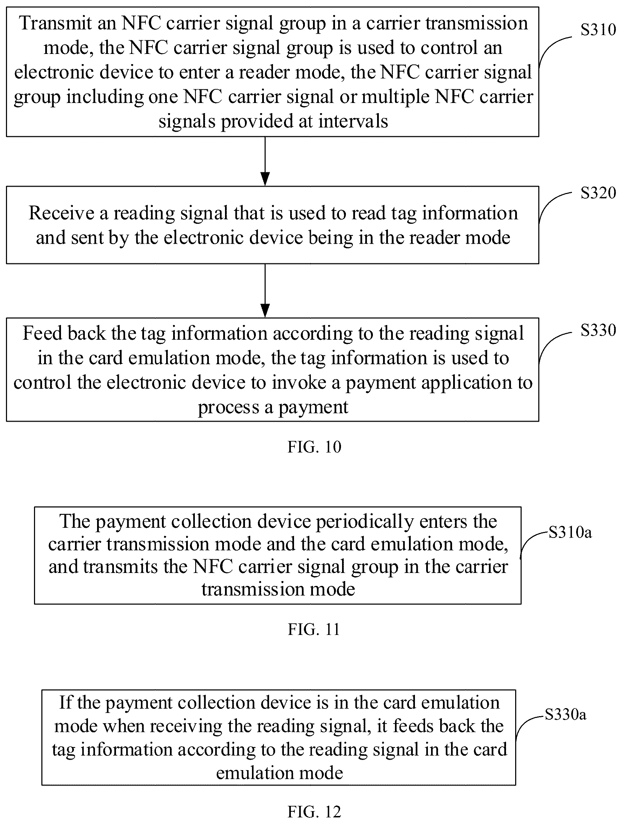

Referring to FIG. 10, a flowchart of a payment collection method provided by an embodiment of the present disclosure is illustrated. The payment collection method includes S310, S320, and S330 which will be described in detail below.

In S310, an NFC carrier signal group is transmitted in a carrier transmission mode, the NFC carrier signal group is used to control an electronic device 1 to enter a reader mode, and the NFC carrier signal group includes one NFC carrier signal or multiple NFC carrier signals provided at intervals.

In an implementation, when the electronic device 1 being in the screen-off mode receives the NFC carrier signal group, the electronic device 1 is switched from being in the screen-off mode to being in the screen-on mode and enters the reader mode (also referred to as the active mode). In this implementation, before receiving the NFC carrier signal group, the electronic device 1 is in the screen-off mode and in the card emulation mode (also referred to as the passive mode); and after receiving the NFC carrier signal group, the electronic device 1 is switched from being in the screen-off mode to being in the screen-on mode and switched from being in the card emulation mode to being in the reader mode. In other words, the NFC carrier signal group is used to control the electronic device to be switched from being in the screen-off mode to being in the screen-on mode and enter the reader mode.

The electronic device 1 being switched from being in the screen-off mode to being in the screen-on mode usually means that the display screen of the electronic device 1 is switched from the screen-off mode to the screen-on mode. When the electronic device 1 is switched, according to the NFC carrier signal group, from being in the screen-off mode to being in the screen-on mode and from being in the card emulation mode to being in the reader mode, the switching of the electronic device 1 from being in the screen-off mode to being in the screen-on mode may play a role of reminding the user. Further, if the electronic device has a screen lock password, the switching of the electronic device 1, under control of the NFC carrier signal group, from being in the screen-off mode to being in the screen-on mode may also facilitate the electronic device 1 to display an unlock interface for collecting user identity information in the screen-on mode.

In another implementation, after the electronic device 1 being in the screen-off mode receives the NFC carrier signal group, the electronic device 1 keeps being in the screen-off state and enters the reader mode. In this implementation, before receiving the NFC carrier signal group, the electronic device 1 is in the screen-off mode and in the card emulation mode; and after receiving the NFC carrier signal group, the electronic device 1 keeps being in the screen-off state and is switched from being in the card emulation mode to being in the reader mode. In other words, the NFC carrier signal group is used to control the electronic device to keep being in the screen-off mode and enter the reader mode.

In the payment collection method provided by the embodiments of the present disclosure, regarding the NFC carrier signal group used to control the electronic device 1 to enter the reader mode, it includes that: the NFC carrier signal group is used to control the electronic device 1 to be switched from being in the screen-off mode to being in the screen-on mode and enter the reader mode; or, the NFC carrier signal group is used to control the electronic device 1 to keep being in the screen-off state and enter the reader mode, as long as the electronic device 1 can enter the reader mode according to the NFC carrier signal group.

The payment collection device 3 being in the carrier transmission mode means that the payment collection device 3 is in the active mode. The payment collection device 3 transmits the NFC carrier signal group in the carrier transmission mode, that is, the payment collection device 3 sends the NFC carrier signal group in the active mode.

Each NFC carrier signal in the NFC carrier signal group is usually an NFC single carrier signal and it does not carry an NFC command. In other words, the NFC carrier signal in the NFC carrier signal group is a single carrier without an NFC command. For example, the NFC carrier signal in the NFC carrier signal group is a sine wave with a resonant frequency of 13.56 MHz. In some other implementations, the resonant frequency of the NFC carrier signal in the NFC carrier signal group is greater than or equal to 13.56 MHz-7 KHz and less than or equal to 13.56 MHz+7 KHz.

In this embodiment, the payment collection device 3 transmits the NFC carrier signal group in the carrier transmission mode, and the NFC carrier signal in the NFC carrier signal group does not carry an NFC command. Therefore, the electronic device 1 does not need to send, according to the NFC command, a response signal that is used to control the payment collection device 3 to enter the card emulation mode. Usually, electronic devices 1 may have multiple manufacturers, and some electronic devices 1 produced by some manufacturers may not have a function of sending a response signal in terms of hardware. The payment collection method provided by the embodiments of the present disclosure has relatively low requirements on the hardware of the electronic device 1, and it can be applied to more electronic devices 1.

The NFC carrier signal in the NFC carrier signal group is different from the standard NFC signal transmitted by the read head being in the reader mode of for example metro, bus, or access control terminals. If the NFC carrier signal in the NFC carrier signal group is the same as the standard NFC signal, it would trigger the electronic device 1 to enter a field strength event (also referred to as FieldOn event). Specifically, if the NFC carrier signal in the NFC carrier signal group is the same as the standard NFC signal, the NFC carrier signal in the NFC carrier signal group would trigger the electronic device 1 to enter the card emulation mode or continue to maintain the card emulation mode. However, the electronic device 1 in the card emulation mode and the payment collection device 3 in the reader mode cannot complete the payment. For example, in the related art, manufacturers of the payment collection device 3 and manufacturers of various electronic devices 1 have not reached an agreement on business models, business processes, etc., so that the electronic device 1 in the card emulation mode and the payment collection device 3 in the reader mode cannot complete the payment. Among them, the business models between the manufacturers of the payment collection devices 3 and the manufacturers of various electronic devices 1 include authorization rights, authorization fees, profit sharing, etc. of the Embedded Secure Element (eSE). The business processes include, but are not limited to, the emulation router configuration of the electronic device 1.

The NFC carrier signal group may be generated by an independent NFC chip in the payment collection device 3, or by an integrated chip in the payment collection device 3 that supports both the reader function and the tag function, which is not limited in the present disclosure.

When the electronic device 1 interacts with the payment collection device 3 and the electronic device 1 processes a payment to the payment collection device 3, the distance between the electronic device 1 and the payment collection device 3 is less than or equal to a preset distance. For example, the preset distance may be, but not limited to, 20 centimeters. In an implementation, when the distance between the electronic device 1 and the payment collection device 3 is less than or equal to the preset distance, the electronic device 1 can receive the NFC carrier signal group transmitted by the payment collection device 3.

In an implementation, the distance between the electronic device 1 and the payment collection device 3 is zero. For example, when the electronic device 1 is close to and touches the payment collection device 3, the distance between the electronic device 1 and the payment collection device 3 is zero. Regarding the electronic device 1 being close to and touching the payment collection device 3, it is also called that a touch operation is performed between the electronic device 1 and the payment collection device 3, or a tap operation is performed therebetween.

In S320, a reading signal that is used to read tag information and sent by the electronic device 1 being in the reader mode is received.

When the electronic device 1 is in the reader mode and the payment collection device 3 is in the card emulation mode, the electronic device 1 and the payment collection device 3 can communicate, and the payment collection device 3 receives the reading signal sent by the electronic device 1 being in the reader mode. The reading signal is used to read the tag information of the payment collection device 3. The electronic device 1 may process a payment according to the tag information of the payment collection device 3.

In S330, the tag information is fed back according to the reading signal in the card emulation mode, the tag information is used to control the electronic device 1 to invoke a payment application to process a payment.

The electronic device 1 is in the reader mode, the payment collection device 3 is in the card emulation mode, and the electronic device 1 communicates with the payment collection device 3. In an implementation, the electronic device 1 being in the reader mode sends a reader command to read the tag information of the payment collection device 3 being in the card emulation mode.

The electronic device 1 being in the reader mode turns on the NFC signal transmission function (which is also referred to as turning on the NFC field strength) and sends the reader command. In an implementation, the reader command is an NFC standard command. Correspondingly, the payment collection device 3 being in the card emulation mode feeds back the tag information according to the reading signal, so as to control the electronic device 1 to invoke the payment application to process the payment. The reader command is used to read the tag information of the payment collection device 3, where the tag information includes a command for invoking the payment application, an amount to be paid, and other information.

In summary, in the payment collection method provided by the embodiments of the present disclosure, the payment collection device 3 sends the NFC carrier signal group in the carrier transmission mode, and the NFC carrier signal group is used to control the electronic device 1 to enter the reader mode. The payment collection device 3 receives the reading signal that is used to read the tag information and sent by the electronic device 1 being in the reader mode. The payment collection device 3 feeds back, in the card emulation mode, the tag information according to the reading signal, where the tag information is used to control the electronic device to invoke the payment application to process a payment. As can be seen, the payment collection method provided by the embodiments of the present disclosure can alleviate the problem in the related art that the user is troubled in processing a payment when the electronic device 1 in the screen-off mode, and reduce the trouble of processing a payment with the electronic device 1.

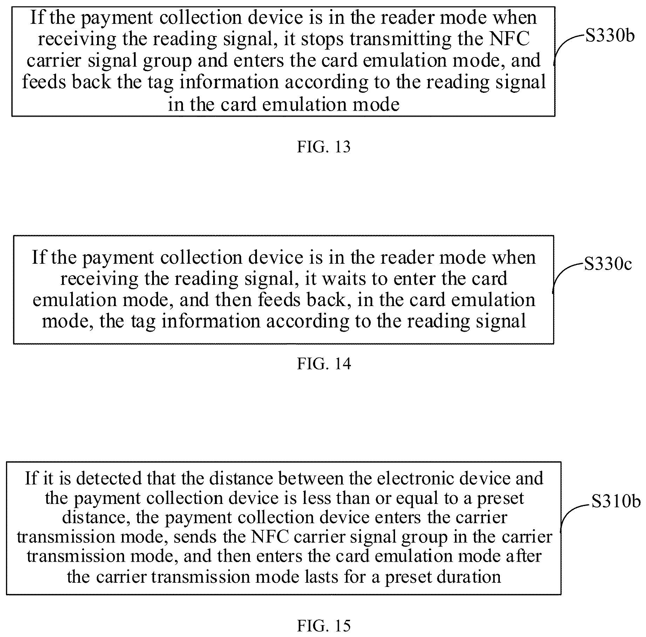

Referring to FIG. 5, FIG. 11, FIG. 12, FIG. 13, and FIG. 14, FIG. 11 is a detailed flowchart of S310 according to an embodiment, FIG. 12 is a detailed flowchart of S330a included in S330 according to an embodiment, FIG. 13 is a detailed flowchart of S330b included in S330 according to another embodiment, and FIG. 14 is a detailed flowchart of S330c included in S330 according to still another embodiment. Referring to FIG. 11, S310 specifically includes S310a described in detail below.

In S310a, the payment collection device 3 periodically enters the carrier transmission mode and the card emulation mode, and transmits the NFC carrier signal group in the carrier transmission mode.

The payment collection device 3 periodically enters the carrier transmission mode and the card emulation mode, and it is thus also referred to as that the payment collection device 3 performs polling. Alternatively, it is referred to as that the payment collection device 3 polls the carrier transmission mode and the card emulation mode.

In this embodiment, it is illustrated by taking a case where the NFC carrier signal group includes multiple NFC carrier signals as an example, which should not be understood as a limitation to the NFC carrier signal group provided by the embodiments of the present disclosure.

In an implementation, in one cycle T0, the duration of the carrier transmission mode is a first duration T1, and the duration of the card emulation mode is a second duration T2. The second duration is greater than the first duration, that is, T2 > T1. In this implementation, the second duration is greater than the first duration, so that the electronic device 1 has a relatively sufficient time to process a payment after being triggered by the NFC carrier signal group to enter the reader mode.

Correspondingly, referring to FIG. 12, in this embodiment, S330 includes S330a described in detail below.

In S330a, if the payment collection device 3 is in the card emulation mode when receiving the reading signal, the payment collection device 3 feeds back the tag information according to the reading signal in the card emulation mode.

If the payment collection device 3 is being in the card emulation mode when receiving the reading signal, the payment collection device 3 feeds back, in the card emulation mode, the tag information according to the reading signal, so that the electronic device 1 invokes the payment application to process a payment according to the tag information. As can be seen, the payment collection method provided by the embodiments of the present disclosure can alleviate the problem in the related art that the user is troubled in processing a payment when the electronic device 1 is in the screen-off mode, and reduce the trouble of processing a payment with the electronic device 1.

Correspondingly, referring to FIG. 13, in this embodiment, S330 includes S330b described in detail below.

In S330b, if the payment collection device 3 is in the reader mode when receiving the reading signal, the payment collection device 3 stops transmitting the NFC carrier signal group and enters the card emulation mode, and feeds back the tag information according to the reading signal in the card emulation mode.

In this embodiment, if the payment collection device 3 is in the reader mode when receiving the reading signal, the payment collection device 3 stops transmitting the NFC carrier signal group and enters the card emulation mode, and feeds back the tag information according to the reading signal in the card emulation mode, so that the electronic device 1 invokes the payment application to process a payment according to the tag information. As can be seen, the payment collection method provided by the embodiments of the present disclosure can alleviate the problem in the related art that the user is troubled in processing a payment when the electronic device 1 is in the screen-off mode, and reduce the trouble of processing a payment with the electronic device 1.

Further, if the payment collection device 3 is in the reader mode when receiving the reading signal, the payment collection device 3 stops transmitting the NFC carrier signal group and enters the card emulation mode. In other words, if the payment collection device 3 is in the reader mode when receiving the reading signal, the payment collection device 3 terminates the reader mode ahead of time and enters the card emulation mode. This can shorten the time from receiving the reading signal to feeding back the tag information, and improve the payment collection efficiency.

Correspondingly, referring to FIG. 14, in this embodiment, S330 includes S330c described in detail below.

In S330c, if the payment collection device 3 is in the reader mode when receiving the reading signal, the payment collection device 3 waits to enter the card emulation mode, and then feeds back, in the card emulation mode, the tag information according to the reading signal.

In this embodiment, if the payment collection device 3 is in the reader mode when receiving the reading signal, the payment collection device 3 waits to enter the card emulation mode, and then feeds back, in the card emulation mode, the tag information according to the reading signal, so that the electronic device 1 invokes the payment application to process a payment according to the tag information. As can be seen, the payment collection method provided by the embodiments of the present disclosure can also alleviate the problem in the related art that the user is troubled in processing a payment when the electronic device 1 is in the screen-off mode, and reduce the trouble of processing a payment with the electronic device 1.

Further, if the payment collection device 3 is in the reader mode when receiving the reading signal, the payment collection device 3 waits to enter the card emulation mode, and then feeds back, after entering in the card emulation mode, the tag information according to the reading signal, this can make the payment collection method relatively simple.

Further, referring to FIG. 15, a detailed flowchart of S310 in the payment collection method provided by an embodiment of the present disclosure is illustrated. Specifically, S310 includes S310b described in detail below.

In S310b, if it is detected that the distance between the electronic device 1 and the payment collection device 3 is less than or equal to a preset distance, the payment collection device 3 enters the carrier transmission mode, sends the NFC carrier signal group in the carrier transmission mode, and then enters the card emulation mode after the carrier transmission mode lasts for a preset duration.

In an implementation, the distance between the electronic device 1 and the payment collection device 3 being less than or equal to the preset distance indicates that the electronic device 1 is close to the payment collection device 3 in some cases. If the payment collection device 3 is in the carrier transmission mode when the payment collection device 3 determines that the distance between the electronic device 1 and the payment collection device 3 is less than or equal to the preset distance, the payment collection device 3 continues to maintain the carrier transmission mode; and if the payment collection device 3 is in the card emulation mode when the payment collection device 3 determines that the distance between the electronic device 1 and the payment collection device 3 is less than or equal to the preset distance, the payment collection device 3 is controlled to be switched from being in the card emulation mode to being in the carrier transmission mode.

For example, the preset distance may be, but not limited to, 20 centimeters. In an implementation, when the distance between the electronic device 1 and the payment collection device 3 is less than or equal to the preset distance, the electronic device 1 can better receive the NFC carrier signal group transmitted by the payment collection device 3.

The payment collection device 3 transmits the NFC carrier signal group in the carrier transmission mode, and make such transmission in the carrier transmission mode last for a preset duration. For example, the duration may be, but not limited to, 50 ms, 100 ms, or 150 ms. In this implementation, the NFC carrier signal group includes multiple NFC carrier signals provided at uniform intervals. For example, the width t of the NFC carrier signal matches a preset width t₀. The preset width t₀ ranges from 10 µs to 35 µs. The range of the preset width t₀ is 10 µs to 35 µs, for example, the preset width may be, but not limited to, 10 µs, 15 µs, 20 µs, 25 µs, 30 µs, or 35 µs. In an implementation, a time interval between two adjacent NFC carrier signals may be, but not limited to, 8 ms to 20 ms.

In the scenario where the electronic device 1 and the payment collection device 3 interact to process a payment, when the distance between the electronic device 1 and the payment collection device 3 is less than or equal to the preset distance, the electronic device 1 and the payment collection device 3 are ready to process the payment. The payment collection device 3 enters the carrier transmission mode and transmits the NFC carrier signal group in the carrier transmission mode, and makes such transmission in the carrier transmission mode last for a preset duration. The NFC carrier signal group can be received by the electronic device 1 and can trigger the electronic device 1 to be switched from being in the screen-off mode to being in the screen-on mode and enter the reader mode. When the payment collection device 3 is in the carrier transmission mode, it transmits the NFC carrier signal group in the carrier transmission mode; and after the carrier transmission mode lasts for the preset duration, the payment collection device 3 enters the card emulation mode, so as to receive the reader command sent by the electronic device 1. If the payment collection device 3 being in the card emulation mode receives the reader command, the payment collection device 3 feeds back the tag information to the electronic device 1, and the electronic device 1 processes the payment according to the tag information.

As can be seen, the payment collection method provided by the embodiments of the present disclosure can alleviate the problem in the related art that the user is troubled in processing a payment when the electronic device 1 is in the screen-off mode, reduce the trouble of processing a payment with the electronic device 1, and the payment collection method is simple and convenient.

Further, in an implementation, the NFC carrier signal group includes one NFC carrier signal or multiple NFC carrier signals provided at intervals, and the width t of the NFC carrier signal matches the preset width t₀, where the width t matching the range of the preset width t₀ satisfies 10 µs ≤ t ≤ 35 µs.

The NFC carrier signal group includes one NFC carrier signal or multiple NFC carrier signals provided at intervals. The parameter of the NFC carrier signal group includes the width of the NFC carrier signal, and the preset parameter includes a preset width range. If the width of the NFC carrier signal falls within the preset width range, the parameter of the NFC carrier signal group matches the preset parameter, and the NFC carrier signal group is used to control the electronic device 1 to be switched from being in the screen-off mode to being in the screen-on mode and enter the reader mode according to the NFC carrier signal group. In this way, interference of other NFC signals on the electronic device 1 can be prevented, and the accuracy and security of the electronic device 1 during payment can be improved.

The width of the NFC carrier signal is the duration of the NFC carrier signal. For ease of description, the width of the NFC carrier signal is denoted as t, and the preset width is denoted as t₀. When the width t of the NFC carrier signal satisfies t₀-a ≤ t ≤ t₀+a, it is determined that the width of the NFC carrier signal matches the preset width.

During detection, in order to increase the detection robustness, the width t of the NFC carrier signal is usually compared with a range including the preset width t₀, that is, it is determined whether t satisfies t₀-a ≤ t ≤ t₀+a. If it is satisfied, it is determined that the width of the NFC carrier signal matches the preset width; and if it is not satisfied, it is determined that the width of the NFC carrier signal does not match the preset width.

For example, if the preset width t₀ is 15 µs and a = 5 µs, when the width of the NFC carrier signal is 15 µs-5 µs ≤ t ≤ 15 µs+5 µs, it is considered that the width of the NFC carrier signal matches the preset width.

In another implementation, the NFC carrier signal group includes multiple NFC carrier signals provided at uniform intervals. The parameter of the NFC carrier signal group includes the width of the NFC carrier signal and the time interval between two adjacent NFC carrier signals. Correspondingly, the preset parameter includes a preset width and a preset interval. If the width of the NFC carrier signal matches the preset width and the time interval between two adjacent NFC carrier signals matches the preset interval, it is determined that the parameters of the NFC carrier signal group match the preset parameters. And it is determined that the parameters of the NFC carrier signal group do not match the preset parameters, if at least one of the following conditions is met: the width of the NFC carrier signal does not match the preset width, and the time interval between two adjacent NFC carrier signals does not match the preset interval. The NFC carrier signal group matching the preset parameter(s) is used to trigger the electronic device 1 to be switched from being in the screen-off mode to being in the screen-on mode and enter the reader mode according to the NFC carrier signal group. The NFC carrier signal group not matching the preset parameter(s) cannot trigger the electronic device 1 to be switched from being in the screen-off mode to being in the screen-on mode according to the NFC carrier signal group, and the electronic device 1 cannot enter the reader mode.

The preset width t₀ ranges from 10µs to 35µs. For example, the preset width may be, but not limited to, 10 µs, 15 µs, 20 µs, 25 µs, 30 µs, or 35 µs.

If the width of the NFC carrier signal is too small, the NFC carrier signal is not easily identified by the electronic device 1. If the width of the NFC carrier signal is too large, it is easy for the NFC carrier signal to trigger the electronic device 1 to enter a field strength event (also referred to as a FieldOn event). Specifically, if the width of the NFC carrier signal is too large, the NFC carrier signal group is likely to trigger the electronic device 1 to enter the card emulation mode or continue to maintain the card emulation mode.

In an implementation, the duration of the sub-carrier signal in the standard NFC signal that triggers the electronic device to enter the field strength event (i.e., entering the card emulation mode or continuing to maintain the card emulation mode) is usually greater than or equal to 5 ms. For example, when the electronic device 1 being in the card emulation mode communicates with the read head of the metro, bus, or access control terminal being in the reader mode, the read head sends a standard NFC signal, and the duration of the sub-carrier signal in the standard NFC signal is greater than or equal to 5 ms.

The range of the preset width t₀ is 10 µs to 35 µs, which can enable the NFC carrier signal group to trigger the electronic device 1 to enter the reader mode, and reduce the probability of triggering the electronic device 1 to enter the card emulation mode, or reduce the probability of triggering the electronic device 1 to maintain the card emulation mode. As can be seen, in the embodiments, the range of the preset width t₀ is 10 µs to 35 µs, which can improve the accuracy of the electronic device 1 entering the reader mode, thereby alleviating the trouble of the electronic device during payment in the related art.

In an implementation, the time interval between two adjacent NFC carrier signals may be, but not limited to, 8 ms to 20 ms. For example, the time interval between two adjacent NFC carrier signals may be, but not limited to, 8 ms, 9 ms, 10 ms, 11 ms, 12 ms, 13 ms, 14 ms, 15 ms, 16 ms, 17 ms, 18 ms, 19 ms, or 20 ms.

In an implementation, the time interval between two adjacent sub-carrier signals in the standard NFC signal that triggers the electronic device 1 to enter the field strength event (i.e., entering the card emulation mode or continuing to maintain the card emulation mode) is usually 100 ms to 200 ms. In the payment collection method provided by the embodiments of the present disclosure, the time interval between two adjacent NFC carrier signals may be, but not limited to, 8 ms to 20 ms, which is quite different from the time interval between two adjacent sub-carrier signals in the standard NFC signal, thereby significantly reducing the probability of triggering the electronic device 1 to enter the card emulation mode and significantly reducing the probability of triggering the electronic device 1 to maintain the card emulation mode. As can be seen, in the embodiments, the time interval between two adjacent NFC carrier signals may be, but not limited to, 8 ms to 20 ms, which can improve the accuracy of the electronic device 1 entering the reader mode, thereby alleviating the trouble of the electronic device 1 during payment in the related art.

In an implementation, the width of the single NFC carrier signal in the NFC carrier signal group is 35 µs, and the time interval between two adjacent NFC carrier signals is 10 ms.

In an implementation, the duration of each cycle is 1s, and in one cycle, the duration of the carrier transmission mode is 50 ms. Correspondingly, the width of the single NFC carrier signal in the NFC carrier signal group is 35 µs, and the time interval between two adjacent NFC carrier signals is 10 ms.

In an implementation, through the designs of the width of the NFC carrier signal in the NFC carrier signal group (such as 10 µs ≤ t ≤ 35 µs), the interval between adjacent NFC carrier signals (such as 8 ms to 20 ms), and the duration of the carrier transmission mode and the duration of the card emulation mode in one cycle (that is, T2 > T1), in one aspect, the NFC carrier signal group can more accurately trigger the electronic device 1 to enter the screen-on mode and the reader mode; and in another aspect, the electronic device 1 can have a relatively sufficient time to process the payment after being triggered by the NFC carrier signal group to enter the reader mode.

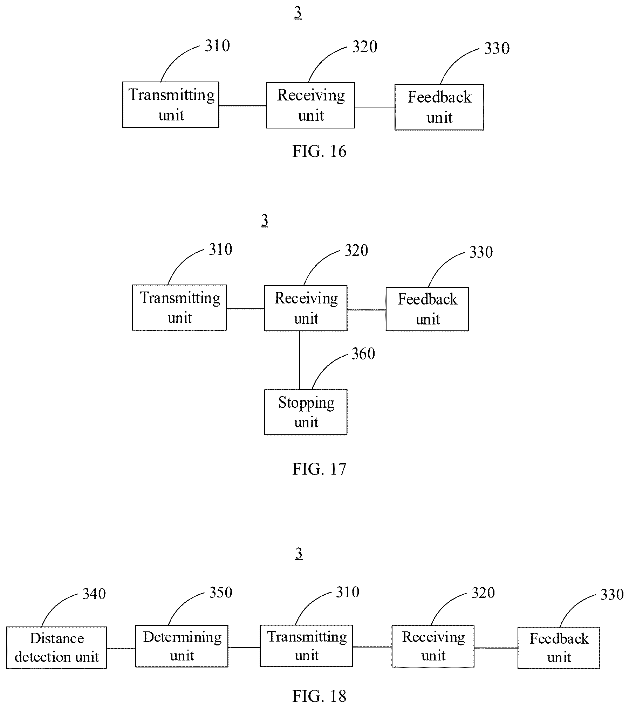

The embodiments of the present disclosure further provide a payment collection device 3, which is used to execute the payment collection method shown in the previous embodiments. Correspondingly, the payment collection method provided by the previous embodiments can be executed by the payment collection device 3 provided by the embodiments of the present disclosure. Referring to FIG. 16, a schematic block diagram of a payment collection device provided by an embodiment of the present disclosure is illustrated. The payment collection device 3 includes a transmitting unit 310, a receiving unit 320, and a feedback unit 330. The transmitting unit 310 is configured to transmit an NFC carrier signal group in a carrier transmission mode, where the NFC carrier signal group is used to control an electronic device 1 to enter a reader mode a reader mode, and the NFC carrier signal group includes one NFC carrier signal or multiple NFC carrier signals provided at intervals. The receiving unit 320 is configured to receive a reading signal that is used to read tag information and sent by the electronic device 1 being in the reader mode. The feedback unit 330 is configured to feed back, in a card emulation mode, the tag information according to the reading signal, where the tag information is used to control the electronic device 1 to invoke a payment application to process a payment.

In an implementation, when the electronic device 1 being in the screen-off mode receives the NFC carrier signal group, the electronic device 1 is switched from being in the screen-off mode to being in the screen-on mode, and enters the reader mode (also referred to as the active mode). In this implementation, before receiving the NFC carrier signal group, the electronic device 1 is in the screen-off mode and in the card emulation mode (also referred to as the passive mode); and after receiving the NFC carrier signal group, the electronic device 1 is switched from being in the screen-off mode to being in the screen-on mode, and switched from being in the card emulation mode to being in the reader mode. In other words, the NFC carrier signal group is used to control the electronic device 1 to be switched from being in the screen-off mode to being in the screen-on mode and enter the reader mode.

The electronic device 1 being switched from being in the screen-off mode to being in the screen-on mode usually means that the display screen of the electronic device 1 is switched from the screen-off mode to the screen-on mode. When the electronic device 1 is switched, according to the NFC carrier signal group, from being in the screen-off mode to being in the screen-on mode and from being in the card emulation mode to being in the reader mode, the switching of the electronic device 1 from being in the screen-off mode to being in the screen-on mode may play a role of reminding the user. Further, if the electronic device 1 has a screen lock password, the switching of the electronic device 1, under control of the NFC carrier signal group, from being in the screen-off mode to being in the screen-on mode may also facilitate the electronic device 1 to display an unlock interface for collecting user identity information in the screen-on mode.

In another implementation, when the electronic device 1 being in the screen-off mode receives the NFC carrier signal group, the electronic device 1 keeps being in the screen-off state and enters the reader mode. In this implementation, before receiving the NFC carrier signal group, the electronic device 1 is in the screen-off mode and in the card emulation mode; and after receiving the NFC carrier signal group, the electronic device 1 keeps being in the screen-off state and is switched from being in the card emulation mode to being in the reader mode. In other words, the NFC carrier signal group is used to control the electronic device 1 to keep being in the screen-off mode and enter the reader mode.

In the payment collection device provided by the embodiments of the present disclosure, regarding the NFC carrier signal group used to control the electronic device 1 to enter the reader mode, it includes that: the NFC carrier signal group is used to control the electronic device 1 to be switched from being in the screen-off mode to being in the screen-on mode and enter the reader mode; or the NFC carrier signal group is used to control the electronic device 1 to keep being in the screen-off state and enter the reader mode, as long as the electronic device 1 can enter the reader mode according to the NFC carrier signal group.

The payment collection device 3 being in the carrier transmission mode means that the payment collection device 3 is in the active mode. The transmitting unit 310 of the payment collection device 3 transmits the NFC carrier signal group in the carrier transmission mode, that is, the payment collection device 3 transmits the NFC carrier signal group in the active mode.

Each NFC carrier signal in the NFC carrier signal group is usually an NFC single carrier signal and it does not carry an NFC command. In other words, the NFC carrier signal in the NFC carrier signal group is a single carrier without an NFC command. For example, the NFC carrier signal in the NFC carrier signal group is a sine wave with a resonant frequency of 13.56 MHz. In some other implementations, the resonant frequency of the NFC carrier signal in the NFC carrier signal group is greater than or equal to 13.56 MHz-7 KHz and less than or equal to 13.56 MHz+7 KHz.

In this embodiment, the transmitting unit 310 of the payment collection device 3 transmits the NFC carrier signal group in the carrier transmission mode, and the NFC carrier signal in the NFC carrier signal group does not carry an NFC command. Therefore, the electronic device 1 does not need to send, according to the NFC command, a response signal that is used to control the payment collection device 3 to enter the card emulation mode. Usually, electronic devices 1 may have multiple manufacturers, and some electronic devices 1 produced by some manufacturers may not have a function of sending a response signal in terms of hardware. The payment collection device 3 provided by the embodiments of the present disclosure has relatively low requirements on the hardware of the electronic device 1, and it can be applied to more electronic devices 1.

The NFC carrier signal in the NFC carrier signal group is different from the standard NFC signal transmitted by the read head being in the reader mode of for example metro, bus, or access control terminals. If the NFC carrier signal in the NFC carrier signal group is the same as the standard NFC signal, it would trigger the electronic device 1 to enter a field strength event (also referred to as FieldOn event). Specifically, if the NFC carrier signal in the NFC carrier signal group is the same as the standard NFC signal, the NFC carrier signal in the NFC carrier signal group would trigger the electronic device 1 to enter the card emulation mode or continue to maintain the card emulation mode. However, the electronic device 1 in the card emulation mode and the payment collection device 3 in the reader mode cannot complete the payment. For example, in the related art, manufacturers of the payment collection device 3 and manufacturers of various electronic devices 1 have not reached an agreement on business models, business processes, etc., so that the electronic device 1 in the card emulation mode and the payment collection device 3 in the reader mode cannot complete the payment. Among them, the business models between the manufacturers of the payment collection devices 3 and the manufacturers of various electronic devices 1 include authorization rights, authorization fees, profit sharing, etc. of the Embedded Secure Element (eSE). The business processes include, but are not limited to, the emulation router configuration of the electronic device 1.

The transmitting unit 310 that transmits the NFC carrier signal group may be implemented by an independent NFC chip in the payment collection device 3, or by an integrated chip in the payment collection device 3 that supports both the reader function and the tag function, which is not limited in the present disclosure.

When the electronic device 1 interacts with the payment collection device 3 and the electronic device 1 processes a payment to the payment collection device 3, the distance between the electronic device 1 and the payment collection device 3 is less than or equal to a preset distance. For example, the preset distance may be, but not limited to, 20 centimeters. In an implementation, when the distance between the electronic device 1 and the payment collection device 3 is less than or equal to the preset distance, the electronic device 1 can receive the NFC carrier signal group transmitted by the payment collection device 3.

In an implementation, the distance between the electronic device 1 and the payment collection device 3 is zero. For example, when the electronic device 1 is close to and touches the payment collection device 3, the distance between the electronic device 1 and the payment collection device 3 is zero. Regarding the electronic device 1 being close to and touching the payment collection device 3, it is also called that a touch operation is performed between the electronic device 1 and the payment collection device 3, or a tap operation is performed therebetween.

When the electronic device 1 is in the reader mode and the payment collection device 3 is in the card emulation mode, the electronic device 1 and the payment collection device 3 can communicate, and the receiving unit 320 of the payment collection device 3 receives the reading signal sent by the electronic device 1 being in the reader mode, where the reading signal is used to read the tag information of the payment collection device 3. The electronic device 1 may process a payment according to the tag information of the payment collection device 3.

The electronic device 1 is in the reader mode, the payment collection device 3 is in the card emulation mode, and the electronic device 1 communicates with the payment collection device 3. In an implementation, the electronic device 1 being in the reader mode sends a reader command to read the tag information of the payment collection device 3 being in the card emulation mode.

The electronic device 1 being in the reader mode turns on the NFC signal transmission function (which is also referred to as turning on the NFC field strength) and sends a reader command. In an implementation, the reader command is an NFC standard command. Correspondingly, the feedback unit 330 of the payment collection device 3 being in the card emulation mode feeds back the tag information according to the reading signal, so as to control the electronic device 1 to invoke the payment application to process a payment. The reader command is used to read the tag information of the payment collection device 3, where the tag information includes a command for invoking the payment application, an amount to be paid, and other information.

In summary, in the payment collection device 3 provided by the embodiments of the present disclosure, the transmitting unit 310 of the payment collection device 3 transmits the NFC carrier signal group in the carrier transmission mode, and the NFC carrier signal group is used to control the electronic device 1 to be switched from being in the screen-off mode to being in the screen-on mode and enter the reader mode. The receiving unit 320 receives the reading signal that is used to read the tag information and sent by the electronic device 1 being in the reader mode. The feedback unit 330 feeds back, in the card emulation mode, the tag information according to the reading signal, where the tag information is used to control the electronic device 1 to invoke the payment application to process the payment. As can be seen, the payment collection device 3 provided by the embodiments of the present disclosure can alleviate the problem in the related art that the user is troubled in processing a payment when the electronic device 1 is in the screen-off mode, and reduce the trouble of processing a payment with the electronic device 1.

Further, in an implementation, the transmitting unit 310 is configured to enable the payment collection device 3 to periodically enter the carrier transmission mode and the card emulation mode, and transmit the NFC carrier signal group in the carrier transmission mode.

In this embodiment, it is illustrated by taking a case where the NFC carrier signal group includes multiple NFC carrier signals as an example, which should not be understood as a limitation to the NFC carrier signal group provided by the embodiments of the present disclosure.

In an implementation, in one cycle T0, the duration of the carrier transmission mode is a first duration T1, and the duration of the card emulation mode is a second duration T2. The second duration is greater than the first duration, that is, T2 > T1. In this implementation, the second duration is greater than the first duration, so that the electronic device 1 has a relatively sufficient time to process the payment after being triggered by the NFC carrier signal group to enter the reader mode.

In an implementation, the feedback unit 330 is configured to, if the payment collection device 3 is in the card emulation mode when receiving the reading signal, feed back the tag information according to the reading signal in the card emulation mode.

If it is being in the card emulation mode when the receiving unit 320 of the payment collection device 3 receives the reading signal, the feedback unit 330 of the payment collection device 3 feeds back the tag information according to the reading signal in the card emulation mode, so that the electronic device 1 invokes the payment application to process a payment according to the tag information. As can be seen, the payment collection device 3 provided by the embodiments of the present disclosure can alleviate the problem in the related art that the user is troubled in processing a payment when the electronic device 1 is in the screen-off mode, and reduce the trouble of processing a payment with the electronic device 1.

Referring to FIG. 17, a schematic block diagram of the payment collection device provided by another embodiment of the present disclosure is illustrated. The payment collection device 3 includes a transmitting unit 310, a receiving unit 320, and a feedback unit 330. For the transmitting unit 310, the receiving unit 320, and the feedback unit 330, reference may be made to those described above, and they will not be repeated here. In this embodiment, the payment collection device 3 further includes a stopping unit 360. If the payment collection device 3 is in the reader mode when receiving the reading signal, the stopping unit 360 stops transmission of the NFC carrier signal group and controls the payment collection device 3 to enter the card emulation mode, and the feedback unit 330 feeds back the tag information according to the reading signal in the card emulation mode.

In this embodiment, if the payment collection device 3 is in the reader mode when the receiving unit 320 of the payment collection device 3 receives the reading signal, the stopping unit 360 of the payment collection device 3 stops transmission of the NFC carrier signal group and controls the payment collection device 3 to enter the card emulation mode, and the tag information is fed back according to the reading signal in the card emulation mode, so that the electronic device 1 invokes the payment application to process a payment according to the tag information. As can be seen, the payment collection device 3 provided by the embodiments of the present disclosure can alleviate the problem in the related art that the user is troubled in processing a payment when the electronic device 1 is in the screen-off mode, and reduce the trouble of processing a payment with the electronic device 1.

Further, if the payment collection device 3 is in the reader mode when the receiving unit 320 of the payment collection device 3 receives the reading signal, the stopping unit 360 of the payment collection device 3 stops transmission of the NFC carrier signal group and controls the payment collection device 3 to enter the card emulation mode. In other words, if the payment collection device 3 is in the reader mode when the receiving unit 320 of the payment collection device 3 receives the reading signal, the stopping unit 360 of the payment collection device 3 terminates the reader mode ahead of time to enter the card emulation mode. This can shorten the time from receiving the reading signal to feeding back the tag information, and improve the payment collection efficiency.

In an implementation, if the payment collection device 3 is in the reader mode when receiving the reading signal, after waiting for the payment collection device 3 to enter the card emulation mode, the feedback unit 330 feeds back the tag information according to the reading signal in the card emulation mode.

In this implementation, if the payment collection device 3 is in the reader mode when the receiving unit 320 of the payment collection device 3 receives the reading signal, after waiting for the payment collection device 3 to enter the card emulation mode, the feedback unit 330 of the payment collection device 3 feeds back the tag information according to the reading signal in the card emulation mode, so that the electronic device 1 invokes the payment application to process a payment according to the tag information. As can be seen, the payment collection device 3 provided by the embodiments of the present disclosure can also alleviate the problem in the related art that the user is troubled in processing a payment when the electronic device 1 is in the screen-off mode, and reduce the trouble of processing a payment with the electronic device 1.

Further, if the payment collection device 3 is in the reader mode when the receiving unit 320 of the payment collection device 3 receives the reading signal, after waiting for the payment collection device 3 to enter the card emulation mode, the feedback unit 330 feeds back the tag information according to the reading signal in the card emulation mode, which can make the payment collection of the payment collection device 3 relatively simple.

Referring to FIG. 18, a schematic block diagram of the payment collection device provided by still another embodiment of the present disclosure is illustrated. The payment collection device 3 includes a transmitting unit 310, a receiving unit 320, and a feedback unit 330. For the transmitting unit 310, the receiving unit 320, and the feedback unit 330, reference may be made to those described above, and they will not be repeated here. In this embodiment, the payment collection device 3 further includes a distance detection unit 340 and a determining unit 350. The distance detection unit 340 is configured to detect the distance between the electronic device 1 and the payment collection device 3 as a detected distance. The determining unit 350 is configured to determine whether the detected distance is less than or equal to a preset distance. If the detected distance is less than or equal to the preset distance, the transmitting unit 310 is configured to control the payment collection device 3 to enter the carrier transmission mode, transmit the NFC carrier signal group in the carrier transmission mode, and then enter the card emulation mode after the carrier transmission mode lasts for a preset duration.

In an implementation, the distance detection unit 340 is configured to detect the distance between the electronic device 1 and the payment collection device 3. If the distance between the electronic device 1 and the payment collection device 3 is less than or equal to the preset distance, it indicates that the electronic device 1 is close to the payment collection device 3 in some cases. If the payment collection device 3 is in the carrier transmission mode when the determining unit 350 of the payment collection device 3 determines that the distance between the electronic device 1 and the payment collection device 3 is less than or equal to the preset distance, the payment collection device 3 continues to keep being in the carrier transmission mode. If the payment collection device 3 is in the card emulation mode when the determining unit 350 of the payment collection device 3 determines that the distance between the electronic device 1 and the payment collection device 3 is less than or equal to the preset distance, the payment collection device 3 is controlled to be switched from being in the card emulation mode to being in the carrier transmission mode.

For example, the preset distance may be, but not limited to, 20 centimeters. In an implementation, when the distance between the electronic device 1 and the payment collection device 3 is less than or equal to the preset distance, the electronic device 1 can better receive the NFC carrier signal group transmitted by the payment collection device 3.

The transmitting unit 310 of the payment collection device 3 transmits the NFC carrier signal group in the carrier transmission mode, and such transmission in the carrier transmission mode lasts for a preset duration. For example, the duration may be, but not limited to, 50 ms, 100 ms, or 150 ms. In an implementation, the NFC carrier signal group includes multiple NFC carrier signals provided at uniform intervals. In an implementation, the time interval between two adjacent NFC carrier signals may be, but not limited to, 8 ms to 20 ms.

In the scenario where the electronic device 1 and the payment collection device 3 interact to process a payment, when the distance between the electronic device 1 and the payment collection device 3 is less than or equal to the preset distance, the electronic device 1 and the payment collection device 3 are ready to process the payment. The payment collection device 3 enters the carrier transmission mode and transmits the NFC carrier signal group in the carrier transmission mode, and makes such transmission in the carrier transmission mode last for a preset duration. The NFC carrier signal group can be received by the electronic device 1, and can trigger the electronic device 1 to be switched from being in the screen-off mode to being in the screen-on mode and enter the reader mode. The transmitting unit of the payment collection device 3 is used to enable the payment collection device 3 to enter the carrier transmission mode, transmit the NFC carrier signal group in the carrier transmission mode, and enter the card emulation mode after the carrier transmission mode lasts for a preset duration, so as to receive the reader command sent by the electronic device 1. If the payment collection device 3 being in the card emulation mode receives the reader command, it feeds back the tag information to the electronic device 1, and the electronic device 1 processes a payment according to the tag information.

As can be seen, the payment collection device 3 provided by the embodiments of the present disclosure can alleviate the problem in the related art that the user is troubled in processing a payment when the electronic device 1 is in the screen-off mode, reduce the trouble of processing a payment with the electronic device 1, and the payment collection device 3 is simple and convenient.

Further, in an implementation, the NFC carrier signal group includes one NFC carrier signal or multiple NFC carrier signals provided at intervals. When the width t of the NFC carrier signal matches a preset width, it is determined that the parameter of the NFC carrier signal group matches the preset parameter.

The width of the NFC carrier signal is the duration of the NFC carrier signal. For ease of description, the width of the NFC carrier signal is denoted as t, and the preset width is denoted as t₀. When the width t of the NFC carrier signal satisfies t₀-a ≤ t ≤ t₀+a, it is determined that the width of the NFC carrier signal matches the preset width.

During detection, in order to increase the detection robustness, the width t of the NFC carrier signal is usually compared with a range including the preset width t₀, that is, it is determined whether t satisfies t₀-a ≤ t ≤ t₀+a. If it is satisfied, it is determined that the width of the NFC carrier signal matches the preset width; and if it is not satisfied, it is determined that the width of the NFC carrier signal does not match the preset width.

For example, if the preset width t₀ is 15 µs and a = 5 µs, when the width of the NFC carrier signal is 15 µs-5 µs ≤ t ≤ 15 µs+5 µs, it is considered that the width of the NFC carrier signal matches the preset width.

In another implementation, the NFC carrier signal group includes multiple NFC carrier signals provided at uniform intervals. The parameter of the NFC carrier signal group includes the width of the NFC carrier signal and the time interval between two adjacent NFC carrier signals. Correspondingly, the preset parameter includes a preset width range and a preset interval. If the width of the NFC carrier signal matches the preset width and the time interval between two adjacent NFC carrier signals matches the preset interval, it is determined that the parameters of the NFC carrier signal group match the preset parameters. And it is determined that the parameters of the NFC carrier signal group do not match the preset parameters, if at least one of the following conditions is met: the width of the NFC carrier signal does not match the preset width, and the time interval between two adjacent NFC carrier signals does not match the preset interval. The NFC carrier signal group matching the preset parameter(s) is used to trigger the electronic device 1 to be switched from being in the screen-off mode to being in the screen-on mode and enter the reader mode according to the NFC carrier signal group. The NFC carrier signal group not matching the preset parameter(s) cannot trigger the electronic device 1 to be switched from being in the screen-off mode to being in the screen-on mode according to the NFC carrier signal group, and the electronic device 1 cannot enter the reader mode.

In an implementation, the preset width t₀ ranges from 10 µs to 35 µs.

The range of the preset width t₀ is 10 µs to 35 µs. For example, the preset width may be, but not limited to, 10 µs, 15 µs, 20 µs, 25 µs, 30 µs, or 35 µs.

If the width of the NFC carrier signal is too small, the NFC carrier signal is not easily identified by the electronic device 1. If the width of the NFC carrier signal is too large, it is easy for the NFC carrier signal to trigger the electronic device 1 to enter a field strength event (also referred to as a FieldOn event). Specifically, if the width of the NFC carrier signal is too large, the NFC carrier signal group is likely to trigger the electronic device 1 to enter the card emulation mode or continue to maintain the card emulation mode.

In an implementation, the duration of the sub-carrier signal in the standard NFC signal that triggers the electronic device 1 to enter the field strength event (i.e., entering the card emulation mode or continuing to maintain the card emulation mode) is usually greater than or equal to 5 ms. For example, when the electronic device 1 being in the card emulation mode communicates with the read head of the metro, bus, or access control terminal being in the reader mode, the read head sends a standard NFC signal, and the duration of the sub-carrier signal in the standard NFC signal is greater than or equal to 5 ms.

The range of the preset width t₀ is 10 µs to 35 µs, which can enable the NFC carrier signal group to trigger the electronic device 1 to enter the reader mode, and reduce the probability of triggering the electronic device 1 to enter the card emulation mode, or reduce the probability of triggering the electronic device 1 to maintain the card emulation mode. As can be seen, in the embodiments, the range of the preset width t₀ is 10 µs to 35 µs, which can improve the accuracy of the electronic device 1 entering the reader mode, thereby alleviating the trouble of the electronic device 1 during payment in the related art.

In an implementation, the time interval between two adjacent NFC carrier signals may be, but not limited to, 8 ms to 20 ms. For example, the time interval between two adjacent NFC carrier signals may be, but not limited to, 8 ms, 9 ms, 10 ms, 11 ms, 12 ms, 13 ms, 14 ms, 15 ms, 16 ms, 17 ms, 18 ms, 19 ms, or 20 ms.

In an implementation, the time interval between two adjacent sub-carrier signals in the standard NFC signal that triggers the electronic device 1 to enter the field strength event (i.e., entering the card emulation mode or continuing to maintain the card emulation mode) is usually 100 ms to 200 ms. In the payment collection device 3 provided by the embodiments of the present disclosure, the time interval between two adjacent NFC carrier signals may be, but not limited to, 8 ms to 20 ms, which is quite different from the time interval between two adjacent sub-carrier signals in the standard NFC signal, thereby significantly reducing the probability of triggering the electronic device 1 to enter the card emulation mode and significantly reducing the probability of triggering the electronic device 1 to maintain the card emulation mode. As can be seen, in the embodiments, the time interval between two adjacent NFC carrier signals may be, but not limited to, 8 ms to 20 ms, which can improve the accuracy of the electronic device 1 entering the reader mode, thereby alleviating the trouble of the electronic device 1 during payment in the related art.

In an implementation, the width of the single NFC carrier signal in the NFC carrier signal group is 35 µs, and the time interval between two adjacent NFC carrier signals is 10 ms.

In an implementation, the duration of each cycle is 1s, and in one cycle, the duration of the carrier transmission mode is 50 ms. Correspondingly, the width of the single NFC carrier signal in the NFC carrier signal group is 35 µs, and the time interval between two adjacent NFC carrier signals is 10 ms.

In an implementation, through the designs of the width of the NFC carrier signal in the NFC carrier signal group (such as 10µs ≤ t ≤ 35µs), the interval between adjacent NFC carrier signals (such as 8 ms to 20 ms), and the duration of the carrier transmission mode and the duration of the card emulation mode in one cycle (that is, T2 > T1), in one aspect, the NFC carrier signal group can more accurately trigger the electronic device 1 to enter the screen-on mode and the reader mode; and in another aspect, the electronic device 1 can have a relatively sufficient time to process a payment after being triggered by the NFC carrier signal group to enter the reader mode.

Further, the embodiments of the present disclosure also provides a computer-readable medium. The computer-readable medium is configured to store a computer program which, when being executed, cause the payment collection method according to any one of the previous embodiments to be implemented.

The computer-readable medium may be, but not limited to, a U disk, a Read-Only Memory (ROM), a Random Access Memory (RAM), a mobile hard disk, a magnetic disk, an optical disk, or other various media capable of storing program codes.

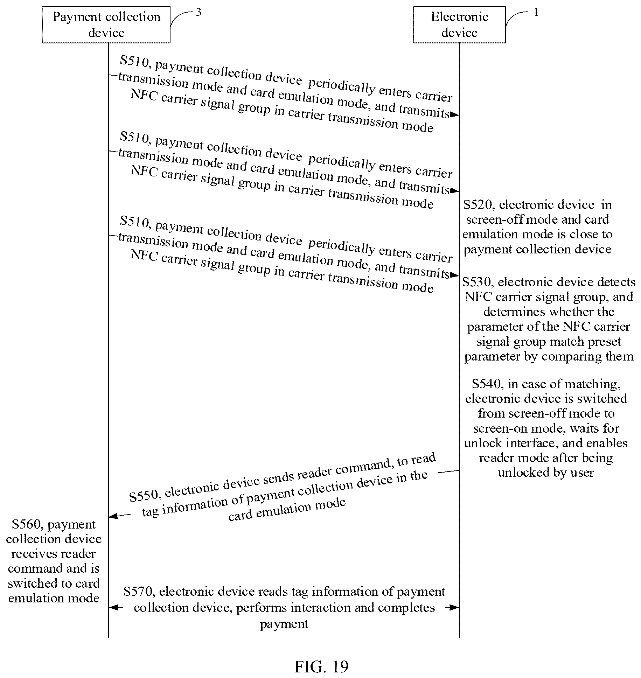

Referring to FIG. 19, a flowchart illustrating interaction between the payment collection device and the electronic device provided by an embodiment of the present disclosure is shown.

In S510, the payment collection device 3 periodically enters the carrier transmission mode and the card emulation mode, and transmits the NFC carrier signal group in the carrier transmission mode. The NFC carrier signal group includes one NFC carrier signal or multiple NFC carrier signals provided at intervals.

Since the payment collection device 3 transmits the NFC carrier signal group in the carrier transmission mode, the payment collection device 3 periodically entering the carrier transmission mode and the card emulation mode is also referred to that the payment collection device 3 polls the NFC carrier transmission mode and the card emulation mode. Usually, the NFC carrier signal in the NFC carrier signal group is a single carrier signal.

In S520, the electronic device 1 being in the screen-off mode and the card emulation mode is close to the payment collection device 3. In an implementation, when the distance between the electronic device 1 and the payment collection device 3 is less than or equal to the preset distance, the electronic device 1 is close to the payment collection device 3. For example, the preset distance may be, but not limited to, 20 centimeters.

In S530, the electronic device 1 detects the NFC carrier signal group, compares the parameter(s) of the NFC carrier signal group with preset parameter(s), and determines whether the parameter(s) of the NFC carrier signal group match the preset parameter(s).

In S540, in case of matching, the electronic device 1 is switched from being in the screen-off mode to being in the screen-on mode, waits for an unlock interface, and enables the reader mode after it is unlocked by the user.

In S550, the electronic device 1 sends a reader command, so as to read the tag information of the payment collection device 3 being in the card emulation mode.

In S560, the payment collection device 3 receives the reader command and is switched to being in the card emulation mode.

In S570, the electronic device 1 reads the tag information of the payment collection device 3, performs interaction and completes the payment. Specifically, NFC payment is performed between the payment collection device 3 and the electronic device 1, the payment collection device 3 completes the payment collection, and the electronic device 1 completes the payment.

As can be seen, in this embodiment, the payment collection device 3 interacts with the electronic device 1; the payment collection device 3 periodically enters the carrier transmission mode and the card emulation mode, and transmits the NFC carrier signal group in the card emulation mode. If the electronic device 1 being in the screen-off mode receives the NFC carrier signal group from the payment collection device 3, and if the electronic device 1 determines that the parameter(s) of the NFC carrier signal group matches the preset parameter(s), the electronic device 1 is switched from being in the screen-off mode to being in the screen-on mode, and enables the reader mode after being unlocked. The electronic device 1 being in the reader mode can communicate with the payment collection device 3 being in the card emulation mode. The electronic device 1 sends a reader command to read the tag information of the payment collection device 3 being in the card emulation mode. The payment collection device 3 receives the reader command and sends the tag information to the electronic device 1. When the electronic device 1 receives the tag information, it invokes the payment application and processes a payment according to the payment information included in the tag information. As can be seen, the interaction between the payment collection device 3 and the electronic device 1 according to the embodiments of the present disclosure can alleviate the problem in the related art that the user is troubled in processing a payment when the electronic device 1 is in the screen-off mode, and reduce the trouble of processing a payment with the electronic device 1.

In an implementation, the payment method provided by the embodiments of the present disclosure is applied to the electronic device 1, which can alleviate the problem in the related art that the user is troubled in processing a payment when the electronic device 1 is in the screen-off mode, and reduce the trouble of processing a payment with the electronic device 1. For existing electronic devices 1, software upgrade may be performed thereon, and the upgraded electronic device 1 can support the payment method. In addition, if the existing electronic devices are not upgraded, they cannot support the payment method provided by the embodiments of the present disclosure, and cannot achieve the purpose of optimizing the payment experience of the electronic device 1 during payment. Since the NFC carrier signal in the NFC carrier signal group is different from the standard NFC signal, the NFC carrier signal in the NFC carrier signal group is not sufficient to cause the un-upgraded electronic device 1 to enter the field strength event (also referred to as FieldOn event), and thus will not mistakenly trigger such electronic device 1 to enter the card emulation mode; and therefore, it will not cause deterioration of the experience.

As can be seen, the payment method provided by the embodiments of the present disclosure can take into account the experience of the electronic device 1 supporting the payment method and the existing electronic devices 1 not supporting the payment method.

Further, the embodiments of the present disclosure further provides an electronic device. The electronic device includes a processor and a memory commutating with each other. The memory stores therein program codes which, when being executed by the processor, cause the processor to implement the payment method according to any one of the previous embodiments. Further, the embodiments of the present disclosure further provides a payment collection device, which also includes a processor and a memory communicating with each other. The memory of the payment collection device stores therein program codes which, when being executed by the processor of the payment collection device, cause the processor to implement the payment collection method according to any one of the previous embodiments. It is notable that, in some embodiments, the electronic device is also capable of implementing the payment collection method according to any one of the previous embodiments, and the payment collection device shown is also capable of implementing the payment method according to any one of the previous embodiments.

It is notable that, regarding the foregoing method embodiments, for the sake of simple description, they are all expressed as a series of action combinations, but those skilled in the art should know that the present disclosure is not limited by the described action sequence, because some steps can be performed in other sequences or simultaneously according to the present disclosure. In addition, those skilled in the art should also know that the embodiments described in the specification are all preferred embodiments, and the involved actions and modules are not necessarily necessary for the present disclosure.

In the above embodiments, the description of each embodiment has its own focus. For the part not described in detail in a certain embodiment, reference may be made to the relevant descriptions of other embodiments.

In the embodiments provided by the present disclosure, it is understandable that the disclosed device may be implemented in other ways. For example, the device embodiments described above are only illustrative. For example, the division of the units is only in terms of logical function. In practice, there may be other divisions. For example, multiple units or components may be combined or integrated into another system, or some features may be ignored or not implemented. In addition, the shown or discussed mutual coupling or direct coupling or communication connection may be indirect coupling or communication connection through some interfaces, devices or units, and may be in electrical or other forms.

The units described as separate components may or may not be physically separated, and the components displayed as units may or may not be physical units, that is, they may be located in one place, or may be distributed on multiple network units. Some or all of the units may be selected according to actual needs to achieve the purpose of the solution of the embodiments.

In addition, the individual functional units in each embodiment of the present disclosure may be integrated into one processing unit, or each unit may exist physically alone, or two or more units may be integrated into one unit. The integrated unit may be implemented in the form of hardware or software functional units.

If the integrated unit is implemented in the form of a software functional unit and sold or used as an independent product, it may be stored in a computer-readable memory. Based on such an understanding, a substantial part of the technical solution of the present disclosure or a part of the technical solution that contributes to the prior art or all or part of the technical solution may be embodied in the form of a software product. The computer software product is stored in a memory and includes several instructions to enable a computer device (which may be a personal computer, a server, or a network device, etc.) to execute all or part of the operations of the method described in each embodiment of the present disclosure. The memory includes a U disk, a Read-Only Memory (ROM), a Random Access Memory (RAM), a mobile hard disk, a magnetic disk, an optical disk, or other various media that can store program codes.

Those of ordinary skill in the art can understand that all or part of the operations in the various methods of the above embodiments may be implemented by instructing relevant hardware through a program. The program may be stored in a computer-readable memory. The memory may include a flash disk, a Read-Only Memory (ROM), a Random Access Memory (RAM), a magnetic disk, an optical disk, or the like.

The foregoing are only specific implementations of the present disclosure, but the protection scope of the present disclosure is not limited thereto. Any person skilled in the art can easily conceive of various equivalent modifications or replacements within the technical scope disclosed in the present disclosure, and these modifications or replacements should fall within the protection scope of the present disclosure. Therefore, the protection scope of the present disclosure should be subject to the protection scope of the claims.

## Claims

1. A payment method, implemented by an electronic device (1), the payment method comprising:
in a screen-off mode of the electronic device (1), receiving (S110) a near field communication, NFC, carrier signal group transmitted by a payment collection device (3) being in a carrier transmission mode, wherein the NFC carrier signal group comprises one NFC carrier signal or a plurality of NFC carrier signals provided at intervals;
entering (S120) a reader mode according to the NFC carrier signal group;
reading (S130), in the reader mode, tag information of the payment collection device (3) being in a card emulation mode; and
invoking (S140) a payment application to process a payment, according to the tag information.

2. The payment method as claimed in claim 1, wherein between the receiving (S110), in the screen-off mode of the electronic device (1), the NFC carrier signal group transmitted by the payment collection device (3) being in the carrier transmission mode and the entering (S120) the reader mode according to the NFC carrier signal group, the payment method further comprises:
comparing (S11) a parameter of the NFC carrier signal group with a preset parameter, to determine whether the parameter of the NFC carrier signal group match the preset parameter; and
the entering (S120) the reader mode according to the NFC carrier signal group comprises:
in a case where the parameter of the NFC carrier signal group matches the preset parameter, entering the reader mode according to the NFC carrier signal group, wherein the NFC carrier signal group comprises at least one parameter.

3. The payment method as claimed in claim 2, wherein the parameter of the NFC carrier signal group comprises a width of each NFC carrier signal, and the preset parameter comprises a preset width; and
the method further comprises:
in a case where the width of each NFC carrier signal matches the preset width, determining that the parameter of the NFC carrier signal group matches the preset parameter.

4. The payment method as claimed in claim 3, wherein the method further comprises:
in a case where the width t of each NFC carrier signal satisfies t₀-a ≤ t ≤ t₀+a, determining that the width of each NFC carrier signal matches the preset width, wherein t₀ represents the preset width, and the preset width t₀ ranges from 10 µs to 35 µs; or the width t of each NFC carrier signal satisfies 10 µs ≤ t ≤ 35 µs.

5. The payment method as claimed in claim 2, wherein the NFC carrier signal group comprises a plurality of NFC carrier signals provided at uniform intervals, the parameter of the NFC carrier signal group comprises a time interval between two adjacent NFC carrier signals, the preset parameter comprises a preset interval, and the method further comprises:
in a case where the time interval between two adjacent NFC carrier signals matches the preset interval, determining that the parameter of the NFC carrier signal group match the preset parameter;
wherein the time interval between two adjacent NFC carrier signals of the NFC carrier signal group ranges from 8 ms to 20 ms.

6. The payment method as claimed in any one of claims 1 to 5, wherein the entering (S120) the reader mode according to the NFC carrier signal group comprises:
according to the NFC carrier signal group, switching from the screen-off mode to a screen-on mode, and entering the reader mode when being in an unlocked state of the electronic device (1); or
according to the NFC carrier signal group, keeping in the screen-off mode and entering the reader mode.

7. The payment method as claimed in any one of claims 1 to 6, wherein before the invoking (S140) the payment application to process the payment according to the tag information, the payment method further comprises:
determining (S13) whether a preset payment mode is enabled in the electronic device (1), wherein the preset payment mode is a payment mode in which the payment is capable of being processed without entering a payment password when an amount to be paid is less than or equal to a preset amount; and
the invoking (S140) the payment application to process the payment according to the tag information comprises:
in a case where the preset payment mode is enabled in the electronic device (1), invoking the payment application to process the payment according to the tag information in a locked state of the electronic device (1).

8. The payment method as claimed in claim 7, wherein after invoking (S140) the payment application to process the payment according to the tag information, the payment method further comprises:
prompting that the payment has been completed.

9. A payment collection method, implemented by a payment collection device (3), the payment collection method comprising:
transmitting (S310) a near field communication, NFC, carrier signal group in a carrier transmission mode, wherein the NFC carrier signal group is used to control an electronic device (1) to enter a reader mode, and the NFC carrier signal group comprises one NFC carrier signal or a plurality of NFC carrier signals provided at intervals;
receiving (S320) a reading signal that is used to read tag information of the payment collection device (3) and sent from the electronic device (1) being in the reader mode; and
feeding back (S330), in a card emulation mode, the tag information according to the reading signal, wherein the tag information is used to control the electronic device (1) to invoke a payment application to process a payment.

10. The payment collection method as claimed in claim 9, wherein the transmitting (S310) the NFC carrier signal group in the carrier transmission mode comprises:
transmitting (S310a) the NFC carrier signal group in the carrier transmission mode, wherein the payment collection device has the carrier transmission mode and the card emulation mode; and
the feeding back (S330), in the card emulation mode, the tag information according to the reading signal comprises:
in a case where the payment collection device (3) is in the card emulation mode when receiving the reading signal, feeding back, in the card emulation mode, the tag information according to the reading signal (S330a); or
in a case where the payment collection device (3) is in a reader mode when receiving the reading signal, stopping transmitting the NFC carrier signal group, entering the card emulation mode, and feeding back, in the card emulation mode, the tag information according to the reading signal (S330b); or
in a case where the payment collection device (3) is in the reader mode when receiving the reading signal, waiting for the payment collection device (3) to enter the card emulation mode, and then feeding back, in the card emulation mode, the tag information according to the reading signal (S330c).

11. The payment collection method as claimed in claim 9, wherein the transmitting (S310) the NFC carrier signal group in the carrier transmission mode comprises:
detecting that a distance between the electronic device (1) and the payment collection device (3) is less than or equal to a preset distance, entering the carrier transmission mode and transmitting the NFC carrier signal group in the carrier transmission mode, and then entering the card emulation mode after the carrier transmission mode lasts for a preset duration (S310b).

12. The payment collection method as claimed in claim 9, wherein a width t of each NFC carrier signal matches a preset width t₀, and t₀ ranges from 10 µs to 35 µs; or the width t of each NFC carrier signal satisfies 10 µs ≤ t ≤ 35 µs; or
in a case where the NFC carrier signal group comprises a plurality of NFC carrier signals provided at uniform intervals, a time interval between two adjacent NFC carrier signals of the NFC carrier signal group ranges from 8 ms to 20 ms.

13. The payment collection method as claimed in claim 9, wherein the NFC carrier signal group is used to control the electronic device (1) to be switched from being in the screen-off mode to being in a screen-on mode and enter the reader mode.

14. An electronic device (1), comprising a processor and a memory communicating with each other, wherein the memory is configured to store therein program instructions which, when being executed by the processor, cause the processor to implement the payment method as claimed in any one of claims 1 to 8.

15. A payment collection device (3), comprising a processor and a memory communicating with each other, wherein the memory is configured to store therein program instructions which, when being executed by the processor, cause the processor to implement the payment collection method as claimed in any one of claims 9 to 13.
